# EUROPEAN PATENT APPLICATION

(11) **EP 4 550 105 A1**
(43) Date of publication of application: **07.05.2025**
(21) Application number: 23851245.3
(22) Date of filing: 13.04.2023
(51) Int. Cl.: G06F 3/06

(54) **DATA REDUCTION METHOD, APPARATUS AND SYSTEM**

(30) Priority: 11.08.2022 CN 202210963029
(71) Applicant: Huawei Technologies Co., Ltd., Shenzhen, Guangdong 518129 (CN)
(72) Inventor: HUANG, Xi, Shenzhen, Guangdong 518129 (CN); CHEN, Junwei, Shenzhen, Guangdong 518129 (CN)
(74) Representative: Goddar, Heinz J.
(86) International application number: PCT/CN2023/088135
(87) International publication number: WO 2024/032015

(57) **Abstract**

A data reduction method, apparatus, and system are provided, and belong to the field of data processing. The method includes: obtaining a first address; and updating, based on popularity of the first address, an entry corresponding to the first address in a hot data table, where popularity of a storage address in the hot data table is greater than popularity of a storage address in a first cache table, and the first cache table is used for data reduction. In this application, overheads of data reduction can be reduced, and efficiency of the data reduction can be improved.

## Description

### TECHNICAL FIELD

This application relates to the field of data processing, and in particular, to a data reduction method, apparatus, and system.

### BACKGROUND

A data reduction technology is a key technology in the storage field. Manners such as deduplication and compression are used to reduce a data scale, reduce overheads and costs of data storage, and improve utilization of a storage device.

In an actual storage scenario, the storage device usually performs data reduction based on a cache table. The cache table is used to record a storage address and a similar fingerprint (SFP) corresponding to the storage address, and an SFP corresponding to each storage address is an SFP of data written into the storage address. For some storage addresses that are frequently accessed, a plurality of SFPs corresponding to the storage addresses are usually stored in the cache table. In the plurality of SFPs, only an SFP of data recently written into the storage address is valid, and other SFPs are invalid. The invalid SFPs tend to increase overheads of the cache table, and consequently overheads of data reduction are increased.

### SUMMARY

This application provides a data reduction method, apparatus, and system, to help reduce overheads of a cache table, to reduce overheads of data reduction and improve efficiency of the data reduction. Technical solutions of this application are as follows.

According to a first aspect, a data reduction method is provided. The method includes: obtaining a first address; and updating, based on popularity of the first address, an entry corresponding to the first address in a hot data table, where popularity of a storage address in the hot data table is greater than popularity of a storage address in a first cache table, and the first cache table is used for data reduction. The storage address in the hot data table is a storage address recorded in the hot data table, and the storage address in the first cache table is a storage address recorded in the first cache table.

Popularity of a storage address is related to a frequency at which the storage address is accessed. A higher frequency at which the storage address is accessed indicates higher popularity of the storage address. A lower frequency at which the storage address is accessed indicates lower popularity of the storage address. For example, the frequency at which the storage address is accessed is a frequency at which data is written into the storage address. A higher frequency at which the data is written into the storage address indicates higher popularity of the storage address. A lower frequency at which the data is written into the storage address indicates lower popularity of the storage address.

According to the technical solution provided in this application, the popularity of the storage address in the hot data table is greater than the popularity of the storage address in the first cache table for the data reduction. A data reduction apparatus records, in the hot data table, an entry corresponding to a storage address with higher popularity, and records, in the first cache table, an entry corresponding to a storage address with lower popularity, so that overheads of the first cache table and overheads of analyzing the first cache table by the data reduction apparatus are reduced, to reduce overheads of the data reduction and improve efficiency of the data reduction.

Optionally, the first address is a storage address of first data, and the updating, based on popularity of the first address, an entry corresponding to the first address in a hot data table includes: when the first address is a hot address, updating, to a fingerprint of the first data, a fingerprint in the entry corresponding to the first address. In other words, when the first address is the hot address, the fingerprint of the first data is used to cover the fingerprint in the entry corresponding to the first address in the hot data table. The fingerprint in the entry corresponding to the first address is also referred to as a fingerprint corresponding to the first address, and the fingerprint in the entry corresponding to the first address is a fingerprint of data written into the first address.

The hot address is a storage address that is frequently accessed, for example, a storage address into which data is frequently written. Correspondingly, a cold address is a storage address that is not frequently accessed. For example, the hot address is a storage address whose quantity of times that data is written into in specified duration is greater than a preset quantity of times, and a cold address is a storage address whose quantity of times that is written into in the specified duration is not greater than the preset quantity of times. For example, a frequency at which the hot address is accessed is higher than a frequency threshold, and a frequency at which the cold address is accessed is not higher than the frequency threshold.

According to the technical solution provided in this application, after the data reduction apparatus obtains the first address (namely, the storage address of the first data), if the data reduction apparatus determines that the first address is the hot address, the data reduction apparatus updates, to the fingerprint of the first data, the fingerprint in the entry corresponding to the first address in the hot data table. This can avoid increasing overheads of the hot data table when a plurality of fingerprints corresponding to the first address are recorded in the hot data table. In other words, the data reduction apparatus updates, to the fingerprint of the first data, the fingerprint in the entry corresponding to the first address, so that the overheads of the hot data table can be reduced.

Optionally, the method further includes: when the first address exists in the hot data table, determining that the first address is the hot address. To be specific, for a storage address, the data reduction apparatus determines, depending on whether the storage address exists in the hot data table, whether the storage address is the hot address. When the data reduction apparatus determines that the storage address exists in the hot data table, the data reduction apparatus determines that the storage address is the hot address. When the data reduction apparatus determines that the storage address does not exist in the hot data table, the data reduction apparatus determines that the storage address is not the hot address, in other words, determines that the storage address is the cold address.

Optionally, the updating, based on popularity of the first address, an entry corresponding to the first address in a hot data table includes: when the first address is the hot address, updating an eviction parameter in the entry corresponding to the first address. The eviction parameter in the entry corresponding to the first address is also referred to as an eviction parameter corresponding to the first address, or is referred to as an eviction parameter of the first address.

According to the technical solution provided in this application, when the data reduction apparatus determines that the first address is the hot address, the data reduction apparatus updates the eviction parameter in the entry corresponding to the first address in the hot data table, so that when subsequently evicting the entry in the hot data table, the data reduction apparatus evicts, based on a latest eviction parameter of the first address, the entry corresponding to the first address. For example, a fingerprint in the first address and the fingerprint in the entry corresponding to the first address are evicted based on the latest eviction parameter of the first address.

Optionally, the eviction parameter includes at least one of the following: a quantity of times that data is written into the first address and a timestamp at which data is written into the first address for the last time. The quantity of times that data is written into the first address may be a quantity of times that data is written into the first address after the first address is recorded in the hot data table. The timestamp at which the data is written into the first address for the last time may be a timestamp at which the data is written into the first address for the last time after the first address is recorded in the hot data table.

Optionally, the updating, based on popularity of the first address, an entry corresponding to the first address in a hot data table includes: when the first address changes to a cold address, reading, into the first cache table, the entry corresponding to the first address. In other words, the entry corresponding to the first address is read from the hot data table into the first cache table. For example, the fingerprint in the first address and the fingerprint in the entry corresponding to the first address are read from the hot data table into the first cache table.

According to the technical solution provided in this application, when the data reduction apparatus determines that the first address in the hot data table changes to the cold address, the data reduction apparatus reads, from the hot data table into the first cache table, the entry corresponding to the first address. In this way, this can prevent an entry corresponding to the hot address from being recorded in the first cache table, and facilitate recording, in the first cache table, an entry corresponding to the cold address. In addition, overheads of the first cache table are reduced and the cold address is enabled to enter a data reduction procedure as soon as possible, to improve efficiency of data reduction.

For example, the first address is the storage address of the first data. After the data reduction apparatus obtains the first address, if the data reduction apparatus determines that the first address is the hot address, the data reduction apparatus updates, to the fingerprint of the first data, the fingerprint in the entry corresponding to the first address. Then, when the data reduction apparatus determines that the first address changes to the cold address, the data reduction apparatus reads, from the hot data table into the first cache table, the entry corresponding to the first address. To be specific, the data reduction apparatus records, in the hot data table, the entry corresponding to the hot address, and when the hot address in the hot data table changes to the cold address, the data reduction apparatus reads, from the hot data table into the first cache table, the entry corresponding to the cold address. This can prevent the entry corresponding to the hot address from being recorded in the first cache table, and facilitate recording, in the first cache table, the entry corresponding to the cold address. In addition, overheads of the first cache table and overheads of analyzing the first cache table by the data reduction apparatus are reduced, to reduce overheads of data reduction, and improve efficiency of the data reduction.

Optionally, the method further includes: when an amount of data of the hot data table reaches a preset amount of data, determining that the first address changes to the cold address. To be specific, the data reduction apparatus determines, depending on whether the amount of data of the hot data table reaches the preset amount of data, whether the first address in the hot data table changes to the cold address. When the data reduction apparatus determines that the amount of data of the hot data table reaches the preset amount of data, the data reduction apparatus determines that the first address changes to the cold address. When the data reduction apparatus determines that the amount of data of the hot data table does not reach the preset amount of data, the data reduction apparatus determines that the first address does not change to the cold address.

Optionally, the reading, into the first cache table, the entry corresponding to the first address includes: reading, into the first cache table based on the eviction parameter in the entry corresponding to the first address, the entry corresponding to the first address. In other words, based on the eviction parameter in the entry corresponding to the first address in the hot data table, the entry corresponding to the first address is read from the hot data table into the first cache table. The eviction parameter in the entry corresponding to the first address is also referred to as an eviction parameter corresponding to the first address, or is referred to as an eviction parameter of the first address.

According to the technical solution provided in this application, the data reduction apparatus reads, from the hot data table into the first cache table based on the eviction parameter in the entry corresponding to the first address, the entry corresponding to the first address. In this way, an entry corresponding to a storage address with lower popularity is preferentially evicted to the first cache table as much as possible, to delay evicting an entry corresponding to a storage address with higher popularity to the first cache table. This helps reduce overheads of the first cache table and overheads of analyzing the first cache table by the data reduction apparatus, to reduce overheads of data reduction.

Optionally, the eviction parameter includes at least one of the following: a quantity of times that data is written into the first address and a timestamp at which data is written into the first address for the last time. The quantity of times that data is written into the first address may be a quantity of times that data is written into the first address after the first address is recorded in the hot data table. The timestamp at which the data is written into the first address for the last time may be a timestamp at which the data is written into the first address for the last time after the first address is recorded in the hot data table.

According to the technical solution provided in this application, the data reduction apparatus evicts, to the first cache table based on a quantity of times that data is written into a storage address recorded in the hot data table and/or a timestamp at which data is written into the storage address for the last time, an entry corresponding to the storage address recorded in the hot data table. For example, the data reduction apparatus preferentially evicts, to the first cache table, an entry corresponding to a storage address whose quantity of times that data is written into is less than a preset quantity of times, and/or the data reduction apparatus preferentially evicts, to the first cache table, an entry corresponding to a storage address, where a time difference between a timestamp at which data is written into the storage address for the last time and a current moment is greater than preset duration. In this way, the entry corresponding to the storage address with lower popularity is preferentially evicted to the first cache table as much as possible, to delay evicting, to the first cache table, the entry corresponding to the storage address with higher popularity. This helps reduce overheads of the first cache table and overheads of analyzing the first cache table by the data reduction apparatus, to reduce overheads of data reduction.

Optionally, the reading, into the first cache table, the entry corresponding to the first address includes: reading, into a second cache table, the entry corresponding to the first address, where popularity of a storage address in the second cache table is less than the popularity of the storage address in the hot data table and is greater than the popularity of the storage address in the first cache table (the popularity of the storage address in the second cache table falls between the popularity of the storage address in the first cache table and the popularity of the storage address in the hot data table); and when the second cache table meets an eviction condition, reading, into the first cache table, the entry corresponding to the first address. For example, when the second cache table meets the eviction condition, the data reduction apparatus reads, from the second cache table into the first cache table, the first address and the fingerprint (namely, the fingerprint corresponding to the first address) in the entry corresponding to the first address. A storage address in the second cache table is a storage address recorded in the second cache table.

According to the technical solution provided in this application, when the data reduction apparatus evicts, to the first cache table, the entry corresponding to the storage address in the hot data table, the data reduction apparatus first evicts, to the second cache table, the entry corresponding to the storage address in the hot data table. Then, when the second cache table meets the eviction condition, the data reduction apparatus evicts, to the first cache table, an entry corresponding to the storage address in the second cache table. In this way, the entry corresponding to the storage address with lower popularity is preferentially evicted to the first cache table as much as possible, to delay evicting, to the first cache table, the entry corresponding to the storage address with higher popularity. This reduces overheads of the first cache table and overheads of analyzing the first cache table by the data reduction apparatus, to reduce overheads of data reduction.

Optionally, after the obtaining a first address, the method further includes: when the first address is the cold address, recording, in the hot data table, the entry corresponding to the first address; and recording, in the first cache table, the entry corresponding to the first address.

According to the technical solution provided in this application, when the data reduction apparatus determines that the first address is the cold address, the data reduction apparatus records, in the hot data table, the entry corresponding to the first address, so that when the data reduction apparatus subsequently obtains the first address, the data reduction apparatus determines, based on the hot data table, whether the first address is the hot address. In addition, when the data reduction apparatus determines that the first address is the cold address, the data reduction apparatus records, in the first cache table, the entry corresponding to the first address, so that the first address enters the data reduction procedure as soon as possible.

Optionally, the method further includes: when a hot eviction function is enabled, determining whether the first address is the hot address. For example, the data reduction apparatus is provided with a hot eviction function switch, and the data reduction apparatus enables or disables the hot eviction function via the hot eviction function switch. When the hot eviction function is enabled, the data reduction apparatus determines whether an obtained storage address is a hot address, and performs corresponding processing based on a determining result. When the hot eviction function is disabled, the data reduction apparatus directly records, in the first cache table, an entry corresponding to an obtained storage address without determining whether the storage address is a hot address.

According to the technical solution provided in this application, when the data reduction apparatus determines to enable the hot eviction function, the data reduction apparatus determines whether the obtained storage address is the hot address. In this way, a determining and eviction function of the hot address is flexibly enabled or disabled as needed via the hot eviction function switch. In this way, a processing procedure of data reduction can flexibly meet an actual requirement.

Optionally, the method further includes: when a condition for enabling the hot eviction function is met, enabling the hot eviction function. The condition for enabling the hot eviction function includes at least one of the following: a proportion of a hot address in a storage address of a persistent storage medium is greater than a preset proportion, and an amount of data of the first cache table is greater than a target amount of data. In other words, when the proportion of the hot address in the storage address of the persistent storage medium is greater than the preset proportion, the data reduction apparatus enables the hot eviction function, and/or when the amount of data (for example, an amount of valid data) of the first cache table is greater than the target amount of data, the data reduction apparatus enables the hot eviction function. The storage address of the persistent storage medium is an address of storage space that is in the persistent storage medium and that is used for data storage, and the first cache table is used for reducing data stored in the persistent storage medium.

According to the technical solution provided in this application, when the proportion of the hot address in the storage address of the persistent storage medium is greater than the preset proportion, it indicates that there are many hot addresses of the persistent storage medium. If entries corresponding to the hot addresses are recorded in the first cache table, overheads of the first cache table and overheads of analyzing the first cache table by the data reduction apparatus are easily increased. Therefore, the data reduction apparatus enables the hot eviction function, to prevent, from being recorded in the first cache table, the entries corresponding to the hot addresses. When the amount of data of the first cache table is greater than the target amount of data, this indicates that there is a large amount of data of the first cache table. If entries corresponding to hot addresses are recorded in the first cache table, overheads of the first cache table and overheads of analyzing the first cache table by the data reduction apparatus are easily increased. Therefore, the data reduction apparatus enables the hot eviction function, to prevent, from being recorded in the first cache table, the entry corresponding to the hot address.

Optionally, the method further includes: obtaining a second address; and when the hot eviction function is disabled, recording, in the first cache table, an entry corresponding to the second address. In other words, when disabling the hot eviction function, the data reduction apparatus directly records, in the first cache table, the entry corresponding to the second address without determining whether the storage address is the hot address.

According to a second aspect, a data reduction apparatus is provided. The data reduction apparatus includes modules configured to perform the data reduction method provided in any one of the first aspect or the optional manners of the first aspect. The modules may be implemented based on software, hardware, or a combination of software and hardware, and the modules may be randomly combined or divided based on a specific implementation.

Optionally, the data reduction apparatus is a processor in a storage system. The storage system includes the processor and a storage medium. The storage medium includes a persistent storage medium, and optionally includes a non-persistent storage medium.

Optionally, the data reduction apparatus is a data reduction chip in a storage system. The storage system includes the data reduction chip, a processor, and a storage medium. The storage medium includes a persistent storage medium, and optionally includes a non-persistent storage medium.

Optionally, the data reduction apparatus is a data reduction device outside a storage system. The storage system includes a processor and a storage medium. The storage medium includes a persistent storage medium, and optionally includes a non-persistent storage medium.

According to a third aspect, a data reduction apparatus is provided. The data reduction apparatus includes a processor and a memory. The memory is configured to store a computer program. The processor is configured to execute the computer program stored in the memory, to enable the data reduction apparatus to perform the data reduction method provided in the first aspect or any optional manner of the first aspect.

According to a fourth aspect, a data reduction system is provided. The data reduction system is a storage system. The storage system includes a processor and a storage medium. The processor includes the data reduction apparatus provided in the second aspect.

According to a fifth aspect, a data reduction system is provided. The data reduction system is a storage system. The storage system includes a processor, a data reduction chip, and a storage medium. The data reduction chip includes the data reduction apparatus provided in the second aspect.

According to a sixth aspect, a data reduction system is provided. The data reduction system includes a storage system and a data reduction device located outside the storage system. The data reduction device includes the data reduction apparatus provided in the second aspect or the third aspect.

According to a seventh aspect, a storage device is provided. The storage device includes the data reduction system provided in the fourth aspect or the fifth aspect.

According to an eighth aspect, a computer-readable storage medium is provided. The computer-readable storage medium stores a computer program. When the computer program is executed, the method provided in the first aspect or any optional manner of the first aspect is implemented.

According to a ninth aspect, a computer program product is provided. The computer program product includes a program or code. When the program or code is executed, the method provided in the first aspect or any optional manner of the first aspect is implemented.

According to a tenth aspect, a chip is provided. The chip includes a programmable logic circuit and/or program instructions. When the chip is run, the chip is configured to implement the method provided in the first aspect or any optional manner of the first aspect.

For example, the chip is an application-specific integrated circuit (application-specific integrated circuit, ASIC) or a programmable logic device (programmable logic device, PLD). The PLD may be a complex programmable logic device (complex programmable logic device, CPLD), a field programmable gate array (field programmable gate array, FPGA), generic array logic (generic array logic, GAL), or any combination thereof.

Optionally, the chip is a data reduction chip.

The beneficial effects brought by the technical solutions provided in this application are as follows.

According to the data reduction method, the apparatus, and the system provided in this application, the data reduction apparatus updates, based on the popularity of the first address, the entry corresponding to the first address in the hot data table, where the popularity of the storage address in the hot data table is greater than the popularity of the storage address in the first cache table used for data reduction. Therefore, the data reduction apparatus records, in the hot data table, an entry corresponding to a storage address with higher popularity, and records, in the first cache table, an entry corresponding to a storage address with lower popularity. This reduces overheads of the first cache table and overheads of analyzing the first cache table by the data reduction apparatus, to reduce overheads of the data reduction, and improve efficiency of the data reduction.

### BRIEF DESCRIPTION OF DRAWINGS

FIG. 1 is a diagram of an application scenario according to an embodiment of this application;
FIG. 2 is a diagram of another application scenario according to an embodiment of this application;
FIG. 3 is a diagram of still another application scenario according to an embodiment of this application;
FIG. 4 is a flowchart of a data reduction method according to an embodiment of this application;
FIG. 5 is a flowchart of another data reduction method according to an embodiment of this application;
FIG. 6 is a diagram of a hot data module according to an embodiment of this application;
FIG. 7 is a diagram of another hot data module according to an embodiment of this application;
FIG. 8 is a diagram of evicting, to a second cache table, an entry corresponding to LBA1 in a hot data table according to an embodiment of this application;
FIG. 9 is a diagram of evicting, to a second cache table, an entry corresponding to LBA2 in a hot data table according to an embodiment of this application;
FIG. 10 is a diagram of evicting, to a second cache table, an entry corresponding to LBA3 in a hot data table according to an embodiment of this application;
FIG. 11 is a diagram of evicting, to a second cache table, entries corresponding to LBA1 to LBA12 in a hot data table according to an embodiment of this application;
FIG. 12 is a diagram of evicting, to a first cache table, entries corresponding to LBA1 to LBA4 in a second cache table according to an embodiment of this application;
FIG. 13 is a diagram of evicting, to a first cache table, entries corresponding to LBA5 to LBA8 in a second cache table according to an embodiment of this application;
FIG. 14 is a diagram of evicting, to a first cache table, entries corresponding to LBA9 to LBA12 in a second cache table according to an embodiment of this application;
FIG. 15 is a diagram of a data reduction apparatus according to an embodiment of this application; and
FIG. 16 is a diagram of another data reduction apparatus according to an embodiment of this application.

### DESCRIPTION OF EMBODIMENTS

The following further describes implementations of this application with reference to the accompanying drawings.

A data reduction technology is a key technology in the storage field. Data reduction is performed in manners such as deduplication and compression, to reduce a data scale, and reduce overheads and costs of data storage. The deduplication, namely, deletion of duplicate data, is deletion of a duplicate data block. Only one copy of a same data block is stored. For example, the same data block is pointed to a same storage address to implement deduplication of the same data block, and a duplicate data block in a storage disk may be reduced through the deduplication. The compression is compression of a data block into a smaller data block. For example, at least two data blocks at a same granularity and with same partial content are processed by using a compression algorithm, to generate a data block smaller than a total amount of data of the at least two data blocks. A stored amount of data may be reduced through the compression. The data block is a minimum granularity for performing an operation (for example, storage or reduction) on data, and a minimum data block is 8 KB. The same data block is a data block at a same granularity and with same content.

A storage device usually includes a cache table used for data reduction. After the storage device obtains an input/output (input/output, I/O) request, the storage device writes, into the storage disk, a data block carried in the I/O request, and records, in the cache table, an SFP of the data block, a storage address of the data block (namely, a storage address of the data block in the storage disk), and the like. The SFP of the data block and the storage address of the data block are located in a same entry in the cache table. In other words, the SFP of the data block and the storage address of the data block form one entry in the cache table. Then, the storage device performs batch analysis on data (for example, an SFP) recorded in the cache table, and reduces, based on an analysis result, the data block stored in the storage disk. For example, if SFPs of at least two data blocks recorded in the cache table are the same (in other words, at least two SFPs recorded in the cache table are the same), the storage device reduces, based on storage addresses that are of the at least two data blocks and that are recorded in the cache table, the at least two data blocks stored in the storage disk. For example, the at least two data blocks are the same, and the storage device retains one of the at least two data blocks stored in the storage disk, and deletes another data block in the at least two data blocks. For another example, any two data blocks in the at least two data blocks are partially the same, the storage device performs processing on the at least two data blocks by using the compression algorithm, and obtains a data block whose total amount of data is smaller than total amounts of data of the at least two data blocks. The storage device deletes the at least two data blocks from the storage disk, and stores the smaller data block in the storage disk.

The SFP, also referred to as a weak fingerprint, is a fingerprint obtained through calculation by using an algorithm (for example, a weak hash algorithm). The SFP is used for measuring similarity between two data blocks, and representing whether the two data blocks are partially the same. If the two data blocks are the same, SFPs of the two data blocks are the same. If SFPs of the two data blocks are the same, the two data blocks are at least partially the same. For example, the two data blocks are the same, or a part of data of the two data blocks is the same, and another part of data of the two data blocks is different. In some implementation scenarios, the cache table used for data reduction is also referred to as an opportunity table or uses another name. SFP-based deduplication and compression are also referred to as similar deduplication or data reduction based on similar deduplication.

In an actual storage scenario, a plurality of I/O requests obtained by the storage device in a time period may correspond to a same storage address. In the time period, the storage device needs to perform a frequent writing operation on the storage address (the storage address is referred to as a hot address). For example, the storage device writes, to the storage address in an overwriting manner, data blocks carried in the plurality of I/O requests, and the storage device records, in the cache table, an SFP of a data block carried in each of the plurality of I/O requests and a storage address of the data block. Consequently, the cache table is used to record a plurality of SFPs corresponding to the same storage address (for example, a plurality of entries corresponding to the same storage address exist in the cache table). In the plurality of SFPs, only an SFP of a data block recently written into the storage address is valid, and other SFPs are invalid. Invalid SFPs tend to increase overheads of the cache table and overheads of analyzing the cache table by the storage device. Consequently, overheads of data reduction are increased, and efficiency of the data reduction is affected. For example, data analysis shows that, in a time period, 70% of I/O requests access only 10% of storage addresses. As a result, a writing operation needs to be frequently performed on the 10% of storage addresses in the time period. Consequently, different SFPs corresponding to the 10% of storage addresses are accumulated into the cache table, and a lot of invalid SFPs exist in the cache table, overheads of the cache table are increased, and resources of the storage device are easily wasted during analysis of the invalid SFPs, for example, a processor of the storage device, and computing power resources of a central processing unit (central processing unit, CPU).

In addition, limited by a quantity of data blocks to be reduced, before data reduction is performed, data blocks participating in reduction need to be grouped to obtain at least one data group, and information about each data group needs to be recorded in a grouping information table to support the data reduction. For example, based on the storage address recorded in the cache table and an SFP corresponding to the storage address, data blocks with a same SFP in the storage disk are grouped into one data group. The grouping information table is also referred to as a reduction information cache table. Information about each data group includes an identifier of each data group, an SFP of each data block in each data group, and a storage address of each data block in each data group. When performing the data reduction, the storage device further needs to analyze data in the grouping information table. If a lot of invalid SFPs exist in the cache table, a lot of invalid SFPs also exist in the grouping information table consequently. Overheads of the grouping information table are easily increased. In addition, when the storage device analyzes the invalid SFPs in the grouping information table, resources of the storage device are also consumed, overheads of data reduction are increased, and efficiency of data reduction is affected.

In addition, the cache table and the grouping information table that are used for the data reduction are usually stored in a memory of the storage device. The two tables occupy a large memory of the storage device, and usually reach at least 2% of the memory of the storage device. If a lot of invalid SFPs are recorded in the two tables, the two tables further occupy a large memory, resulting in large memory overheads.

Therefore, a data reduction procedure is used as a background procedure, and memory consumption and computing power consumption that are of the storage device need to be reduced as much as possible, to ensure that a good reduction effect can be implemented without affecting foreground I/O processing, for example, a small reduction rate is implemented. A reduction rate is a percentage value of an amount of data after reduction to an amount of data before reduction. A smaller reduction rate indicates a better reduction effect, and a larger reduction rate indicates a poorer reduction effect.

In view of a problem existing in a current data reduction technology, embodiments of this application provide a data reduction method, apparatus, and system. A data reduction apparatus (for example, a processor in a storage system, a data reduction chip in the storage system, or a data reduction device outside a storage system) maintains a hot data table and a first cache table used for data reduction. Both the hot data table and the first cache table are used to record an entry corresponding to a storage address (the entry corresponding to the storage address includes a fingerprint, for example, an SFP), and popularity of a storage address in the hot data table is greater than popularity of a storage address in the first cache table. After the data reduction apparatus obtains the first address, the data reduction apparatus updates, based on popularity of the first address, an entry corresponding to the first address in the hot data table. In this application, the data reduction apparatus records, in the hot data table, an entry corresponding to a storage address with higher popularity, and records, in the first cache table, an entry corresponding to a storage address with lower popularity, so that overheads of the first cache table are reduced, and overheads and computing power consumption of analyzing the first cache table by the data reduction apparatus are reduced, to reduce overheads and computing power consumption of data reduction, and improve efficiency of the data reduction.

For example, the first address is a storage address of first data. When the data reduction apparatus updates, based on the popularity of the first address, the entry corresponding to the first address in the hot data table, if the data reduction apparatus determines that the first address is a hot address, the data reduction apparatus updates, to a fingerprint of the first data, a fingerprint in the entry corresponding to the first address in the hot data table, in other words, covers the fingerprint in the entry corresponding to the first address in the hot data table by using the fingerprint of the first data. Then, when the data reduction apparatus determines that the first address changes to a cold address, the data reduction apparatus reads, from the hot data table into the first cache table, the entry corresponding to the first address. In other words, the data reduction apparatus records, in the hot data table, the entry corresponding to the hot address. When the data reduction apparatus determines that the hot address in the hot data table changes to the cold address, the data reduction apparatus reads, from the hot data table into the first cache table, an entry corresponding to the cold address. This prevents the entry corresponding to the hot address from being recorded in the first cache table, and facilitates recording, in the first cache table, the entry corresponding to the cold address. In addition, overheads of the first cache table are reduced, and the cold address is enabled to enter a data reduction procedure as soon as possible, to improve efficiency of data reduction.

The following describes the technical solutions provided in this application. First, an application scenario of the technical solution in this application is described.

An application scenario of the technical solution provided in this application is a data reduction system. The data reduction system is a storage system, or the data reduction system includes a storage system and a data reduction device located outside the storage system. An architecture of the storage system may be a centralized architecture or a distributed architecture. This is not limited in embodiments of this application.

In an optional embodiment, the data reduction system is the storage system. The storage system includes a processor and a storage medium. The processor reduces, based on a cache table (for example, the first cache table in this application), data stored in the storage medium. In another optional embodiment, the data reduction system is a storage system. The storage system includes a processor, a data reduction chip, and a storage medium. The data reduction chip reduces, based on a cache table (for example, the first cache table in this application), data stored in the storage medium. In still another optional embodiment, the data reduction system includes a storage system and a data reduction device located outside the storage system. The storage system includes a processor and a storage medium. The data reduction device outside the storage system reduces, based on a cache table (for example, the first cache table described in this application), data stored in a storage medium inside the storage system. The cache table is used to record an entry corresponding to a storage address in the storage medium, and the entry corresponding to the storage address includes the storage address, a fingerprint of data (for example, a data block) stored in the storage address, and the like. The storage medium in the storage system may include a persistent storage medium and a non-persistent storage medium. The cache table may be stored in the non-persistent storage medium, and data may be stored in the persistent storage medium. In other words, in this application, the processor in the storage system may reduce, based on a cache table stored in the non-persistent storage medium in the storage system, the data stored in the persistent storage medium in the storage system. Alternatively, the data reduction chip in the storage system may reduce, based on a cache table stored in the non-persistent storage medium in the storage system, the data stored in the persistent storage medium in the storage system. Alternatively, the data reduction device outside the storage system may reduce, based on the cache table stored in the non-persistent storage medium in the storage system, the data stored in the persistent storage medium in the storage system.

The processor is a general-purpose processor or a dedicated processor. The general-purpose processor may be a CPU. The dedicated processor may be, for example, but is not limited to, a digital signal processor (digital signal processor, DSP), an application-specific integrated circuit (application-specific integrated circuit, ASIC), a complex programmable logical device (complex programmable logical device, CPLD), a field programmable gate array (field programmable gate array, FPGA), or generic array logic (generic array logic, GAL). The data reduction chip is a programmable electronic component configured to perform data reduction. The data reduction chip implements a data reduction operation, which can reduce impact of CPU scheduling. The persistent storage medium may be a storage disk, for example, a magnetic disk, a hard disk, an optical disc, a register, a read-only memory (read-only memory, ROM), a programmable ROM (programmable ROM, PROM), an erasable PROM (erasable PROM, EPROM), an electrically erasable PROM (electrically erasable PROM, EEPROM), or a non-volatile RAM (non-volatile RAM, NVRAM). The non-persistent storage medium may be a memory, for example, a random access memory (random access memory, RAM). The data reduction device outside the storage system is, for example, but is not limited to, various types of devices such as a host, a terminal, a server, or a virtual machine. The terminal may be a smartphone, a tablet computer, a notebook computer, a desktop computer, a multimedia player, an e-reader, a wearable device, or the like. The storage system may be an internal system of the storage device, for example, an internal system of a storage array or a storage server.

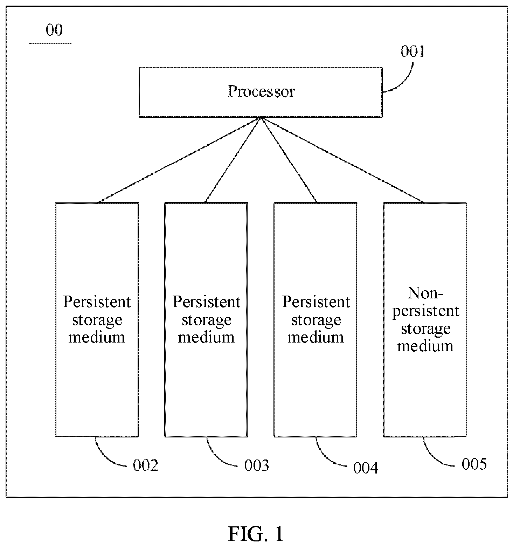

In an example, FIG. 1 is a diagram of an application scenario of this application. A data reduction system provided in the application scenario is a storage system 00. The storage system 00 includes a processor 001, persistent storage media 002 to 004, and a non-persistent storage medium 005. The processor 001 is separately connected to the persistent storage media 002 to 004 and the non-persistent storage medium 005. The persistent storage media 002 to 004 are configured to store data. The non-persistent storage medium 005 is configured to store a cache table. Fingerprints and storage addresses that are of the data in the persistent storage media 002 to 004 are recorded in the cache table. The processor 001 reduces, based on the cache table stored in the non-persistent storage medium 005, the data stored in the persistent storage media 002 to 004.

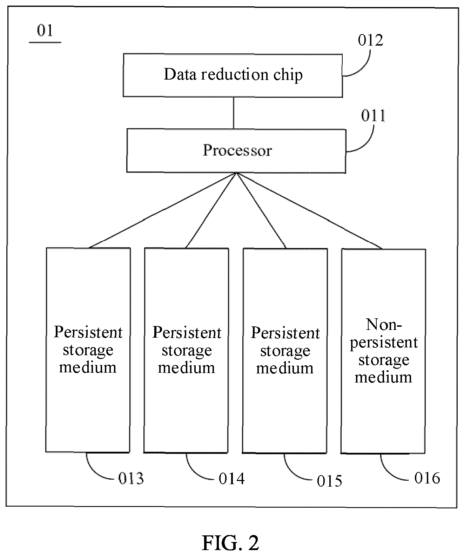

In another example, FIG. 2 is a diagram of another application scenario of this application. A data reduction system provided in the application scenario is a storage system 01. The storage system 01 includes a processor 011, a data reduction chip 012, persistent storage media 013 to 015, and a non-persistent storage medium 016. The processor 011 is separately connected to the data reduction chip 012, the persistent storage media 013 to 015, and the non-persistent storage medium 016. The persistent storage media 013 to 015 are configured to store data. The non-persistent storage medium 016 is configured to store a cache table. Fingerprints and storage addresses that are of the data in the persistent storage media 013 to 015 are recorded in the cache table. The data reduction chip 012 or the processor 011 reduces, based on the cache table stored in the non-persistent storage medium 016, the data stored in the persistent storage media 013 to 015. Optionally, the data reduction chip 012 interacts with the persistent storage media 013 to 015 and the non-persistent storage medium 016 via the processor 011, and the data reduction chip 012 reduces the data stored in the persistent storage media 013 to 015. In some embodiments, the data reduction chip 012 is directly separately connected to the persistent storage media 013 to 015 and the non-persistent storage medium 016. The data reduction chip 012 interacts with the persistent storage media 013 to 015 and the non-persistent storage medium 016 by bypassing the processor 011, to reduce, based on the cache table stored in the non-persistent storage medium 016, the data stored in the persistent storage media 013 to 015.

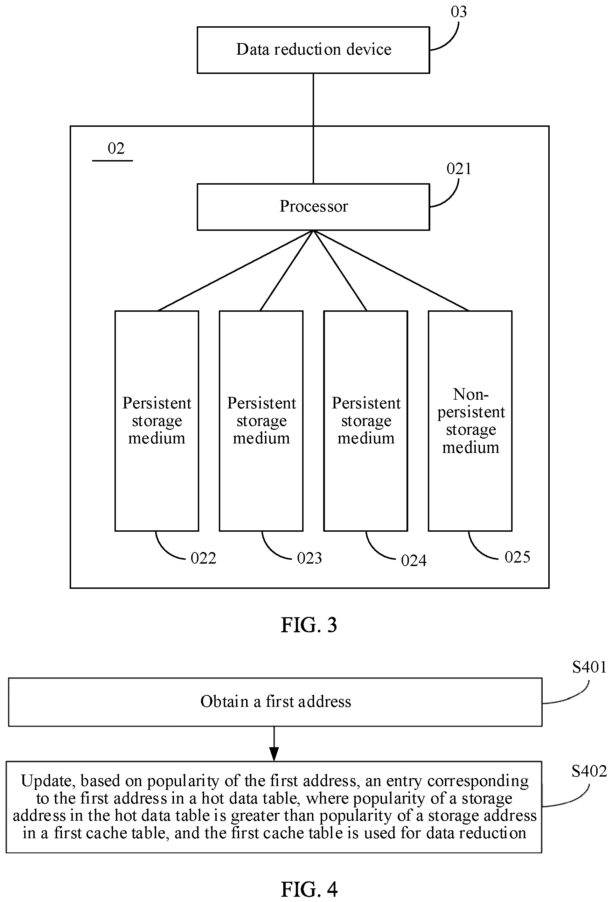

In still another example, FIG. 3 is a diagram of still another application scenario of this application. A data reduction system provided in the application scenario includes a storage system 02 and a data reduction device 03 located outside the storage system 02. The storage system 02 includes a processor 021, persistent storage media 022 to 024, and a non-persistent storage medium 025. The processor 021 is separately connected to the persistent storage media 022 to 024, the non-persistent storage medium 025, and the data reduction device 03. The persistent storage media 022 to 024 are configured to store data. The non-persistent storage medium 025 is configured to store a cache table. Fingerprints and storage addresses that are of the data in the persistent storage media 022 to 024 are recorded in the cache table. The data reduction device 03 reduces, based on the cache table stored in the non-persistent storage medium 025, the data stored in the persistent storage media 022 to 024. Optionally, the data reduction device 03 interacts with the persistent storage media 022 to 024, and the non-persistent storage medium 025 via the processor 021, to reduce, based on the cache table stored in the non-persistent storage medium 025, the data stored in the persistent storage media 022 to 024.

The application scenarios shown in FIG. 1 to FIG. 3 are merely used as examples. In an implementation process, the data reduction system may further include another device. A quantity of persistent storage media, a quantity of non-persistent storage media, a connection relationship between a processor and a storage medium, a connection relationship between a data reduction chip and a storage medium, and the like may be configured based on a requirement. This is not limited in embodiments of this application.

The foregoing describes the application scenario of this application, and the following describes embodiments of the data reduction method in this application.

FIG. 4 is a flowchart of a data reduction method according to an embodiment of this application. The data reduction method is performed by a data reduction apparatus. The data reduction apparatus may be a processor in a storage system, a data reduction chip in the storage system, or a data reduction device outside the storage system. For example, the data reduction apparatus is the processor in FIG. 1, the processor or the data reduction chip in FIG. 2, or the data reduction device in FIG. 3. The method includes the following steps S401 and S402.

S401: Obtain a first address.

The data reduction apparatus may obtain the first address. The first address may be a logical address. For example, the first address is a logical block address (logical block address, LBA). Optionally, the first address is a storage address of first data, and the first data may be a data block. A granularity of the first data is not limited in this embodiment of this application.

In this embodiment of this application, the data reduction apparatus may be the processor in the storage system (for example, a storage device), the data reduction chip in the storage system, or the data reduction device outside the storage system. The first data is a data block (namely, a data block that has been written into a persistent storage medium) stored in the persistent storage medium in the storage system, or the first data is a data block to be written into the persistent storage medium.

In an optional embodiment, the data reduction apparatus is the processor in the storage system. In an example, the first data is the data block stored in the persistent storage medium in the storage system, and the data reduction apparatus obtains the storage address of the first data, namely, the first address, based on a storage location of the first data in the persistent storage medium. In another example, the first data is the data block to be written into the persistent storage medium in the storage system, and the data reduction apparatus obtains (for example, receives) an I/O request that carries the first data and the first address, and obtains the first address, namely, the storage address of the first data, from the I/O request.

In another optional embodiment, the data reduction apparatus is the data reduction chip in the storage system or the data reduction device outside the storage system, and the first data is the data block stored in the persistent storage medium in the storage system or the data block to be written into the persistent storage medium. The processor in the storage system obtains the storage address of the first data (namely, the first address) and sends the first address to the data reduction apparatus, and the data reduction apparatus receives the first address sent by the processor.

In this embodiment of this application, an example in which both the data reduction chip in the storage system and the data reduction device outside the storage system interact with the storage medium in the storage system via the processor in the storage system is used for description. Optionally, if the data reduction chip or the data reduction device directly interacts with the storage medium in the storage system, when the data reduction apparatus is the data reduction chip or the data reduction device, the data reduction apparatus may alternatively obtain the first address by using the method provided in the foregoing optional embodiment. This is not limited in this embodiment of this application.

S402: Update, based on popularity of the first address, an entry corresponding to the first address in a hot data table, where popularity of a storage address in the hot data table is greater than popularity of a storage address in a first cache table, and the first cache table is used for data reduction.

The data reduction apparatus maintains the hot data table and the first cache table. The hot data table and the first cache table each are used to record an entry corresponding to the storage address. An entry corresponding to each storage address may include a fingerprint (for example, an SFP). The fingerprint in the entry corresponding to each storage address is a fingerprint of data stored in the storage address. The popularity of the storage address in the hot data table is greater than the popularity of the storage address in the first cache table. The first cache table is stored in a non-persistent storage medium of the storage system, and the first cache table is used for data reduction. For example, the first cache table is used for reduction of data stored in the persistent storage medium of the storage system. For example, the data reduction apparatus may reduce, based on the fingerprint in the entry corresponding to the storage address recorded in the first cache table, the data stored in the persistent storage medium of the storage system. The hot data table may alternatively be stored in the non-persistent storage medium of the storage system. This is not limited in this embodiment of this application.

In an optional embodiment, when the data reduction apparatus performs S402, the data reduction apparatus first determines whether the first address is a hot address. When the data reduction apparatus determines that the first address is the hot address, the data reduction apparatus performs S402. For example, the data reduction apparatus updates, to a fingerprint of the first data, a fingerprint in the entry corresponding to the first address in the hot data table. Then, when the data reduction apparatus determines that the first address changes to a cold address, the data reduction apparatus reads, from the hot data table into the first cache table, the entry corresponding to the first address, so that the entry corresponding to the first address is updated.

In conclusion, according to the data reduction method provided in this embodiment of this application, the data reduction apparatus updates, based on the popularity of the first address, the entry corresponding to the first address in the hot data table, where the popularity of the storage address in the hot data table is greater than the popularity of the storage address in the first cache table used for data reduction. Therefore, the data reduction apparatus records, in the hot data table, an entry corresponding to a storage address with higher popularity, and records, in the first cache table, an entry corresponding to a storage address with lower popularity. This reduces overheads of the first cache table and overheads of analyzing the first cache table by the data reduction apparatus, to reduce overheads of the data reduction, and improve efficiency of the data reduction.

The following further describes the data reduction method provided in embodiments of this application with reference to the accompanying drawings.

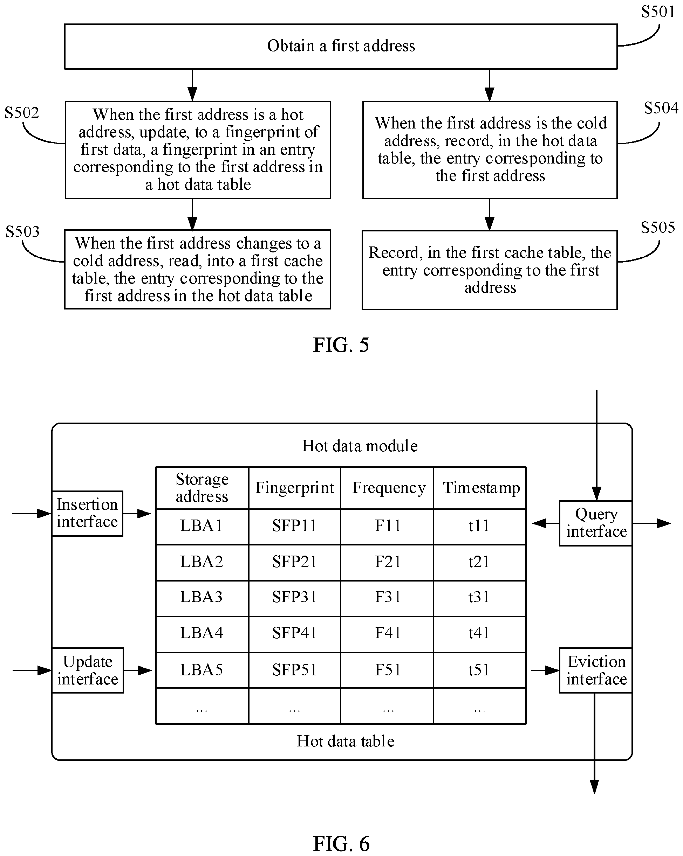

FIG. 5 is a flowchart of another data reduction method according to an embodiment of this application. The data reduction method is performed by a data reduction apparatus. The data reduction apparatus may be a processor in a storage device, a data reduction chip in the storage device, or a data reduction device outside the storage device. For example, the data reduction apparatus is the processor in FIG. 1, the processor or the data reduction chip in FIG. 2, or the data reduction device in FIG. 3. The method includes the following steps S501 to S503.

S501: Obtain a first address.

For an implementation process of S501, refer to related descriptions in S401. Details are not described herein again.

S502: When the first address is a hot address, update, to a fingerprint of first data, a fingerprint in an entry corresponding to the first address in a hot data table.

The data reduction apparatus maintains the hot data table. The hot data table includes an address set used for querying hot and cold features. The hot data table includes a data structure such as a hash table or a linked list. The hot data table can provide basic functions such as entry insertion, querying, deletion, and update. In this embodiment of this application, the hot data table is used to record an entry corresponding to the hot address. An entry corresponding to each hot address includes the hot address and a fingerprint (for example, an SPF) corresponding to the hot address. The fingerprint corresponding to each hot address is a fingerprint of data stored in the hot address. Optionally, the entry corresponding to each hot address further includes an eviction parameter, and the eviction parameter in the entry corresponding to each hot address is an eviction parameter corresponding to the hot address (which is also referred to as an eviction parameter of the hot address). The eviction parameter of each hot address includes at least one of the following: a quantity of times (which is also referred to as a frequency) that data is written into the hot address and a timestamp at which data is written into the hot address for the last time. For example, the quantity of times that data is written into each hot address is a quantity of times that data is written into the hot address after the hot address is recorded in the hot data table. The timestamp at which the data is written into each hot address for the last time is a timestamp at which the data is written into the hot address for the last time after the hot address is recorded in the hot data table. The hot address is a storage address that is frequently accessed. For example, a storage address into which data is written in specified duration for a quantity of times greater than a preset quantity of times is referred to as a hot address. If a hot address is not frequently accessed in other specified duration, the hot address changes to a cold address. Optionally, a frequency at which the hot address is accessed is greater than a frequency threshold, and a frequency at which the cold address is accessed is not greater than the frequency threshold.

After the data reduction apparatus obtains the first address, the data reduction apparatus first determines whether the first address is the hot address. When the data reduction apparatus determines that the first address is the hot address, the data reduction apparatus updates, to the fingerprint of the first data, the fingerprint in the entry corresponding to the first address in the hot data table (in other words, the fingerprint of the first data is used to cover the fingerprint in the entry corresponding to the first address in the hot data table). Optionally, the data reduction apparatus further updates an eviction parameter in the entry corresponding to the first address. The fingerprint in the entry corresponding to the first address is also referred to as a fingerprint corresponding to the first address, and the eviction parameter in the entry corresponding to the first address is also referred to as an eviction parameter corresponding to the first address, or is referred to as an eviction parameter of the first address.

In an optional embodiment, that the data reduction apparatus determines whether the first address is the hot address includes: The data reduction apparatus determines whether the first address exists in the hot data table. When the data reduction apparatus determines that the first address exists in the hot data table, the data reduction apparatus determines that the first address is the hot address. When the data reduction apparatus determines that the first address does not exist in the hot data table, the data reduction apparatus determines that the first address is not the hot address, in other words, the first address is the cold address.

In an optional embodiment, that the data reduction apparatus updates, to the fingerprint of the first data, the fingerprint in the entry corresponding to the first address in the hot data table includes: The data reduction apparatus replaces, with the fingerprint of the first data, the fingerprint in the entry corresponding to the first address in the hot data table (an updated fingerprint in the entry corresponding to the first address is the fingerprint of the first data). For example, the data reduction apparatus first deletes the fingerprint in the entry corresponding to the first address in the hot data table, and then records the fingerprint of the first data in the entry corresponding to the first address. Before the data reduction apparatus updates, to the fingerprint of the first data, the fingerprint in the entry corresponding to the first address in the hot data table, the data reduction apparatus may obtain the fingerprint of the first data. For example, the data reduction apparatus obtains the fingerprint of the first data by using a fingerprint algorithm, or the data reduction apparatus receives the fingerprint that is of the first data and that is sent by another apparatus or device. For example, the fingerprint of the first data is an SFP, and the data reduction apparatus calculates the first data by using an SFP algorithm to obtain an SFP of the first data.

In an optional embodiment, the eviction parameter in the entry corresponding to the first address includes a quantity of times (which is also referred to as a frequency) that data is written into the first address and a timestamp at which data is written into the first address for the last time. That the data reduction apparatus updates the eviction parameter in the entry corresponding to the first address in the hot data table includes: The data reduction apparatus increases, by 1, the quantity of times that data is written into the first address recorded in the entry corresponding to the first address. The data reduction apparatus updates, to a timestamp at which the first data is written into the first address, the timestamp at which data is written into the first address, for the last time, recorded in the entry corresponding to the first address. For example, the data reduction apparatus replaces, with the timestamp at which the first data is written into the first address, the timestamp at which data is written into the first address, for the last time, recorded in the entry corresponding to the first address. An updated timestamp at which the first data is written into the first address for the last time is the timestamp at which the first data is written into the first address.

In an example, a storage address (namely, a hot address) recorded in the hot data table is an LBA, and an entry corresponding to each LBA includes the LBA, an SPF of data stored in the LBA, and an eviction parameter of the LBA. In addition, the eviction parameter includes a quantity of times that data is written into the LBA and a timestamp at which data is written into the LBA for the last time. In this case, the hot data table may be shown in the following Table 1.

**Table 1**

| Storage address (hot address) | Fingerprint | Frequency (quantity of times that data is written) | Timestamp (timestamp at which data is written for the last time) |
|---|---|---|---|
| LBA1 | SPF11 | F11 | t11 |
| LBA2 | SPF21 | F21 | t21 |
| LBA3 | SPF31 | F31 | t31 |
| LBA4 | SPF41 | F41 | t41 |
| LBA5 | SPF51 | F51 | t51 |
| ... | ... | ... | ... |

As shown in Table 1, an entry corresponding to the hot address "LBA1" includes the hot address "LBA1", the fingerprint "SPF11", the quantity "F11" of times that data is written into the hot address "LBA1", and the timestamp "t11" at which data is written into the hot address "LBA1" for the last time. An entry corresponding to the hot address "LBA2" includes the hot address "LBA2", the fingerprint "SPF21 ", the quantity "F21" of times that data is written into the hot address "LBA2", and the timestamp "t21" at which data is written into the hot address "LBA2" for the last time. The rest is deduced by analogy.

It is assumed that the first address is LBA1, and the fingerprint of the first data is SPF12. The data reduction apparatus determines, by determining whether the first address "LBA1" exists in the hot data table shown in Table 1, whether the first address "LBA1" is the hot address. Because the first address "LBA1" exists in the hot data table shown in Table 1, the data reduction apparatus determines that the first address "LBA1" is the hot address. Then, the data reduction apparatus updates the entry corresponding to the first address "LBA1" in the hot data table shown in Table 1. For example, the data reduction apparatus updates, to the fingerprint "SPF12" of the first data, the fingerprint "SPF11" in the entry corresponding to the first address "LBA1" in the hot data table shown in Table 1. The data reduction apparatus increases, by 1, the quantity "F11" of times that data is written into the first address "LBA1" recorded in the entry corresponding to the first address "LBA1" in the hot data table shown in Table 1. The data reduction apparatus replaces, with the timestamp at which the first data is written into the first address "LBA1", the timestamp "t11" at which data is written into the first address "LBA1", for the last time, recorded in the entry corresponding to the first address "LBA1" in the hot data table shown in Table 1. It is assumed that a value obtained by increasing "F11" by 1 is "F12", and the timestamp at which the first data is written into the first address "LBA1" is t12. In this case, an updated hot data table is shown in the following Table 2.

**Table 2**

| Storage address (hot address) | Fingerprint | Frequency (quantity of times that data is written) | Timestamp (timestamp at which data is written for the last time) |
|---|---|---|---|
| LBA1 | SPF12 | F12 | t12 |
| LBA2 | SPF21 | F21 | t21 |
| LBA3 | SPF31 | F31 | t31 |
| LBA4 | SPF41 | F41 | t41 |
| LBA5 | SPF51 | F51 | t51 |
| ... | ... | ... | ... |

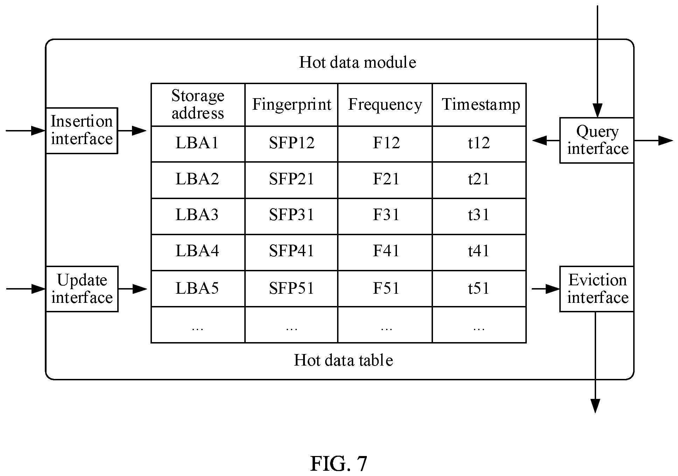

In an optional embodiment, the hot data table maintained by the data reduction apparatus is located in a hot data module. The hot data module includes a query interface and an update interface. The data reduction apparatus queries, through the query interface, whether the first address exists in the hot data table, to determine whether the first address is the hot address. When the data reduction apparatus determines that the first address is the hot address, the data reduction apparatus updates, through the update interface, the entry corresponding to the first address in the hot data table. For example, the hot data table shown in Table 1 is located in a hot data module shown in FIG. 6. The data reduction apparatus queries, through a query interface of the hot data module, whether the first address "LBA1" exists in the hot data table. The data reduction apparatus updates, through an update interface of the hot data module, the entry corresponding to the first address "LBA1" in the hot data table, to obtain the hot data table shown in Table 2. A structure of the hot data module including the hot data table shown in Table 2 is shown in FIG. 7.

S503: When the first address changes to a cold address, read, into a first cache table, the entry corresponding to the first address in the hot data table.

After the data reduction apparatus records the entry corresponding to the first address in the hot data table, for example, after the data reduction apparatus updates, to the fingerprint of the first data, the fingerprint in the entry corresponding to the first address in the hot data table (in other words, after S502), the data reduction apparatus determines, in real time or periodically, whether the first address recorded in the hot data table changes to the cold address. When the data reduction apparatus determines that the first address changes to the cold address, the data reduction apparatus performs an eviction procedure of the first address. For example, the data reduction apparatus reads, from the hot data table into the first cache table, the entry corresponding to the first address (in other words, S503 is performed). After the data reduction apparatus reads, from the hot data table into the first cache table, the entry corresponding to the first address, the data reduction apparatus may delete the entry corresponding to the first address in the hot data table, to reduce overheads of the hot data table. Optionally, when the data reduction apparatus determines that the first address does not change to the cold address, the data reduction apparatus does not perform the eviction procedure of the first address.

In an optional embodiment, after the data reduction apparatus records the entry corresponding to the first address in the hot data table, the data reduction apparatus determines, in real time or periodically, whether an amount of data of the hot data table reaches a preset amount of data. When the data reduction apparatus determines that the amount of data of the hot data table reaches the preset amount of data, the data reduction apparatus determines that the first address recorded in the hot data table changes to the cold address. When the data reduction apparatus determines that the amount of data of the hot data table does not reach the preset amount of data, the data reduction apparatus determines that the first address recorded in the hot data table does not change to the cold address, in other words, the first address is still the hot address. For example, when the data reduction apparatus determines that the amount of data of the hot data table reaches the preset amount of data, the data reduction apparatus determines that all hot addresses recorded in the hot data table change to cold addresses, to determine that the first address recorded in the hot data table changes to the cold address. In this embodiment of this application, an example in which the data reduction apparatus determines, based on the amount of data of the hot data table, whether the first address recorded in the hot data table changes to the cold address is used for description. This is merely an example. Alternatively, the data reduction apparatus may determine, in another manner, whether the first address recorded in the hot data table changes to the cold address. For example, after the data reduction apparatus records, in the hot data table, the entry corresponding to the first address, the data reduction apparatus determines whether to update the entry corresponding to the first address in target duration (which is, for example, target duration after a moment at which the entry corresponding to the first address is recorded in the hot data table). If the data reduction apparatus determines that the entry corresponding to the first address is not updated in the target duration, the data reduction apparatus determines that the first address recorded in the hot data table changes to the cold address; otherwise, the data reduction apparatus determines that the first address recorded in the hot data table does not change to the cold address. Alternatively, the data reduction apparatus may determine, in another manner, whether the first address recorded in the hot data table changes to the cold address. A manner in which the data reduction apparatus determines whether the first address changes to the cold address is not limited in this embodiment of this application.

It can be learned from the descriptions of S502 that an entry corresponding to each storage address (namely, the hot address) recorded in the hot data table optionally includes an eviction parameter of the storage address. The eviction parameter of each storage address includes at least one of the following: a quantity of times that data is written into the storage address and a timestamp at which data is written into the storage address for the last time. The first address is used as a storage address recorded in the hot data table. Optionally, the entry corresponding to the first address includes an eviction parameter, and the eviction parameter of the first address includes at least one of the following: a quantity of times that data is written into the first address and a timestamp at which data is written into the first address for the last time. The data reduction apparatus may read, into the first cache table based on the eviction parameter (namely, the eviction parameter of the first address) in the entry corresponding to the first address recorded in the hot data table, the entry corresponding to the first address recorded in the hot data table. Optionally, when the data reduction apparatus determines that the amount of data of the hot data table reaches the preset amount of data, the data reduction apparatus determines that all storage addresses recorded in the hot data table change to cold addresses. The data reduction apparatus reads, into the first cache table based on the eviction parameter of the storage address recorded in the hot data table, the entry corresponding to the storage address recorded in the hot data table, to evict the entry corresponding to the storage address recorded in the hot data table (in other words, evict the storage address recorded in the hot data table). In a process in which the data reduction apparatus evicts the entry corresponding to the storage address recorded in the hot data table, because the first address is a storage address recorded in the hot data table, the data reduction apparatus may read, from the hot data table into the first cache table, the entry corresponding to the first address. For example, the eviction parameter of each storage address recorded in the hot data table includes the quantity of times that data is written into the storage address, and the data reduction apparatus sequentially reads, from the hot data table into the first cache table in ascending order of quantities of times that data is written into storage addresses recorded in the hot data table, entries corresponding to the storage addresses recorded in the hot data table; and/or the eviction parameter of each storage address recorded in the hot data table includes the timestamp at which data is written into the storage address for the last time, and the data reduction apparatus determines a time difference between the timestamp at which data is written into each storage address, for the last time, recorded in the hot data table and a current moment, and sequentially reads, into the first cache table in descending order of time differences, entries corresponding to storage addresses recorded in the hot data table. In this process, the data reduction apparatus also reads, from the hot data table into the first cache table based on the eviction parameter of the first address, the entry corresponding to the first address.

In an optional embodiment, the data reduction apparatus maintains a second cache table. The second cache table is also used to record an entry corresponding to a storage address. Popularity of the storage address in the second cache table is less than popularity of the storage address in the hot data table and is greater than popularity of the storage address in the first cache table. The popularity of the storage address is related to a frequency at which the storage address is accessed, and the popularity of the storage address may be represented by using a quantity of times (namely, a frequency) that the storage address is accessed in specified duration. A storage address that is accessed for a larger quantity of times in the specified duration has higher popularity. A storage address that is accessed for a smaller quantity of times in the specified duration has lower popularity. After the data reduction apparatus determines that the first address changes to the cold address, the data reduction apparatus first reads, into the second cache table based on the eviction parameter (namely, the eviction parameter of the first address) in the entry corresponding to the first address recorded in the hot data table, the entry corresponding to the first address recorded in the hot data table. Then, when the data reduction apparatus determines that the second cache table meets an eviction condition, the data reduction apparatus reads, into the first cache table, the entry corresponding to the first address recorded in the second cache table. Optionally, when the data reduction apparatus determines that the amount of data of the hot data table reaches the preset amount of data, the data reduction apparatus reads, into the second cache table based on the eviction parameter of the storage address recorded in the hot data table, the entry corresponding to the storage address recorded in the hot data table. In this process, the data reduction apparatus also reads, into the second cache table based on the eviction parameter of the first address, the entry corresponding to the first address recorded in the hot data table. Then, when the data reduction apparatus determines that the second cache table meets the eviction condition, the data reduction apparatus reads, into the first cache table in batches, entries corresponding to storage addresses recorded in the second cache table. In this process, the data reduction apparatus reads, into the first cache table, the entry corresponding to the first address recorded in the second cache table. The data reduction apparatus may read as a whole, into the first cache table, the entry corresponding to the storage address recorded in the second cache table, or may read, into the first cache table, the storage address recorded in the second cache table and a fingerprint in the entry corresponding to the storage address recorded in the second cache table (in other words, may not read, into the first cache table, the eviction parameter of the storage address). This is not limited in this embodiment of this application.

In an optional embodiment, the second cache table corresponds to a plurality of bitmaps (bitmaps) that are arranged in sequence, and each bitmap includes a plurality of bits. Each time the data reduction apparatus reads, into the second cache table, an entry corresponding to one storage address recorded in the hot data table, the data reduction apparatus sets one bit in one bitmap to 1 in an arrangement order of the plurality of bitmaps. This is repeated until all bits in each of the plurality of bitmaps are set to 1. After all the bits in each of the plurality of bitmaps are set to 1, each of the plurality of bitmaps corresponds to a plurality of storage addresses recorded in the second cache table (in other words, corresponds to a plurality of entries in the second cache table, where an entry corresponding to each bitmap is an entry corresponding to a storage address corresponding to each bitmap), and storage addresses corresponding to any two of the plurality of bitmaps do not overlap. The data reduction apparatus may read, into the first cache table in the arrangement order of the plurality of bitmaps, the entry corresponding to each of the plurality of bitmaps in the second cache table, to read, into the first cache table in batches, the entries corresponding to the storage addresses recorded in the second cache table. Each time the data reduction apparatus reads, into the first cache table, an entry corresponding to one bitmap in the second cache table, the data reduction apparatus sets all bits in the bitmap to 0, for use by a storage address that is subsequently evicted from the hot data table. Therefore, the eviction condition may be that all the bits in all the bitmaps corresponding to the second cache table are set to 1.

In this embodiment of this application, each time the data reduction apparatus reads, into the second cache table, an entry corresponding to one storage address recorded in the hot data table, the data reduction apparatus deletes the entry corresponding to the storage address recorded in the hot data table. Each time the data reduction apparatus reads, into the first cache table, an entry corresponding to one storage address recorded in the second cache table, the data reduction apparatus deletes the entry corresponding to the storage address recorded in the second cache table. As shown in FIG. 6 and FIG. 7, the hot data module further includes an eviction interface. The data reduction apparatus may read, into the second cache table through the eviction interface, the entry corresponding to the storage address recorded in the hot data table. In another embodiment, the data reduction apparatus may alternatively read, into the second cache table through the update interface or another interface of the hot data module, the entry corresponding to the storage address in the hot data table. This is not limited in this embodiment of this application.

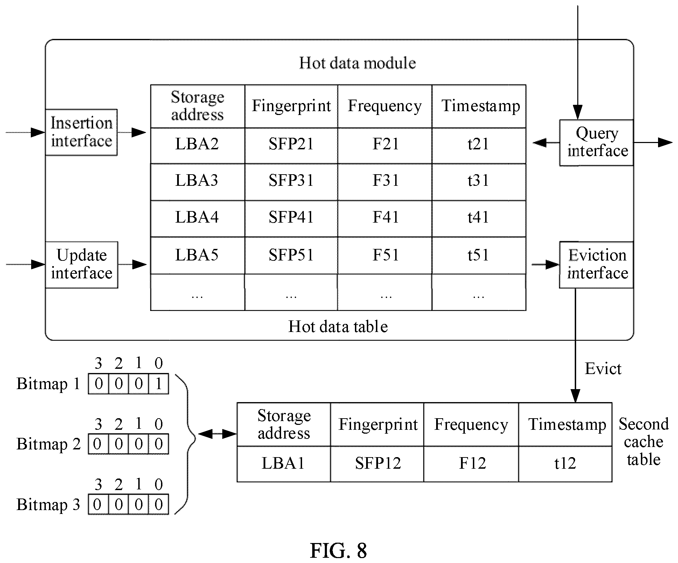

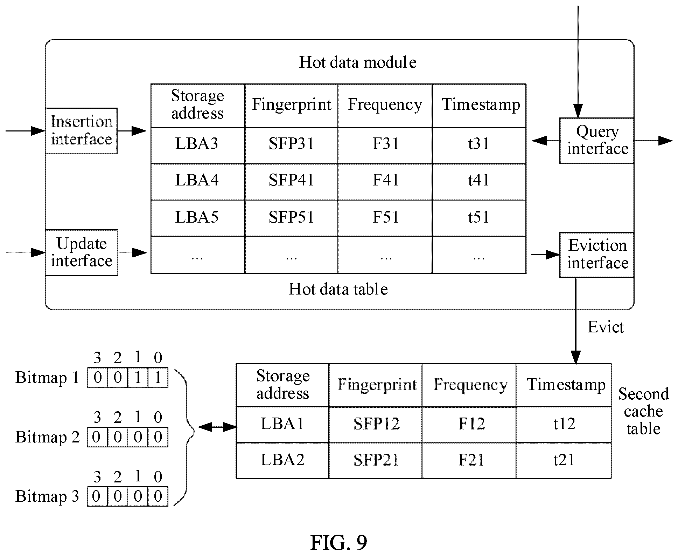

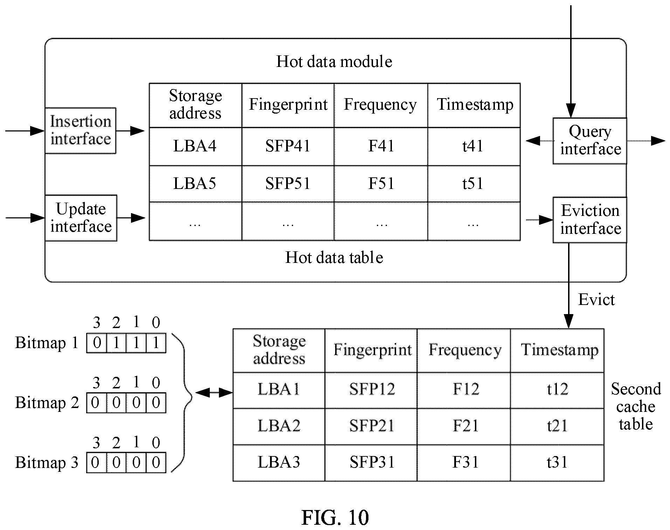

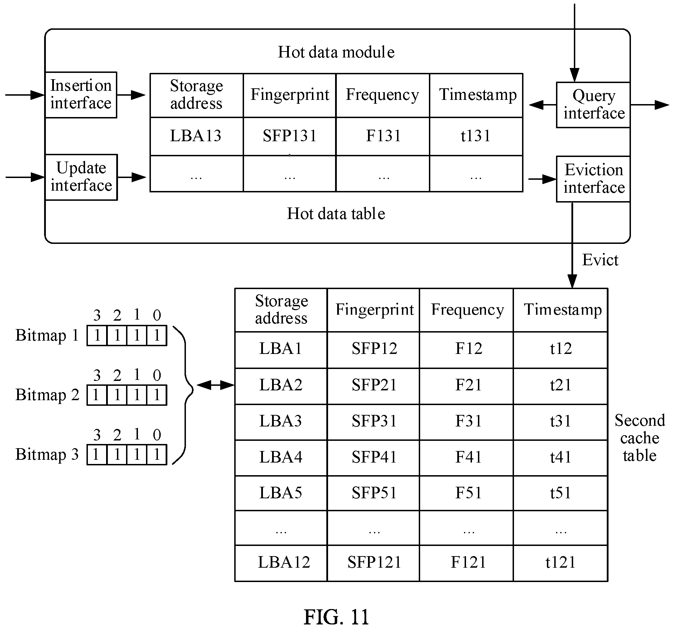

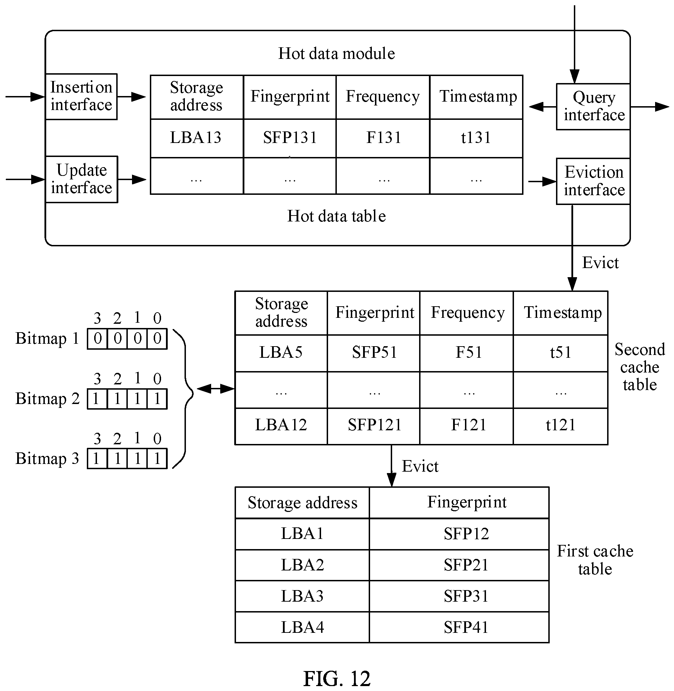

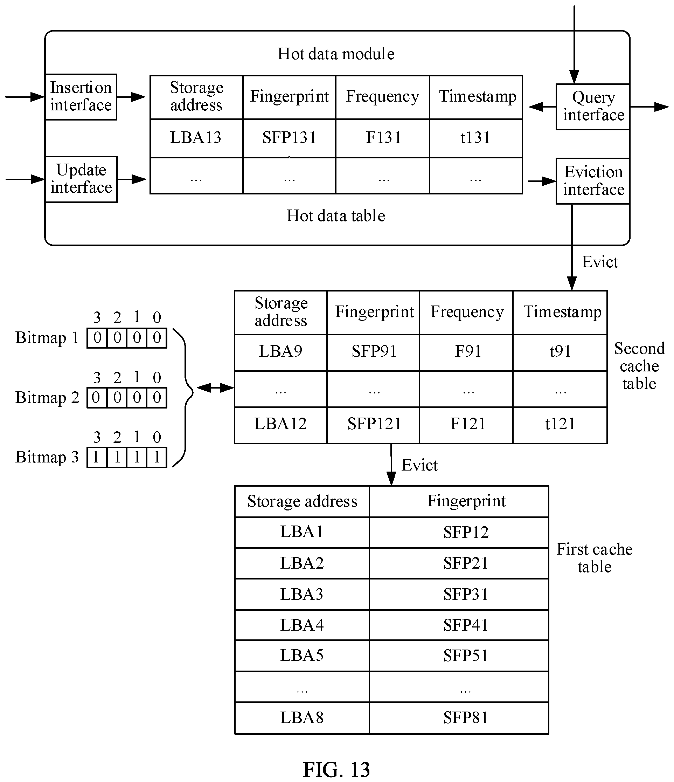

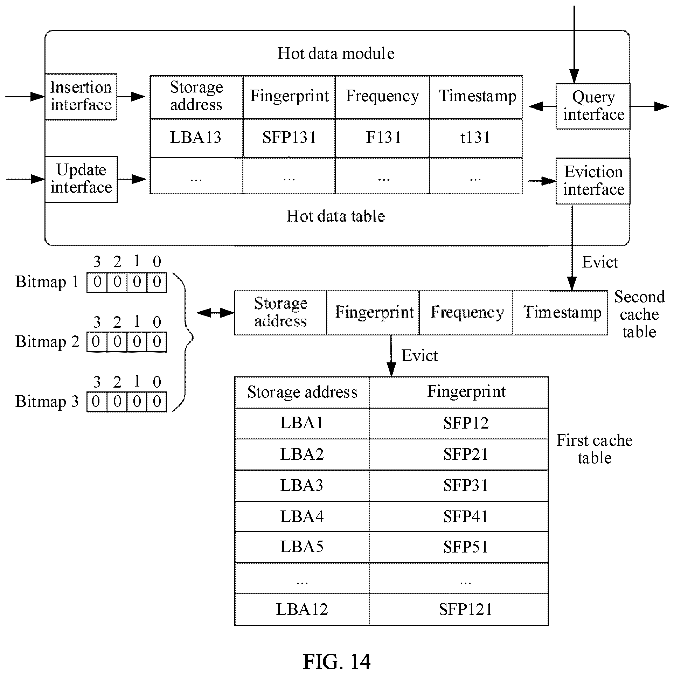

To facilitate understanding of an address eviction procedure (which is also referred to as an entry eviction procedure, that is, content of S503) in this application, S503 is described below with reference to the accompanying drawings. For example, when the data reduction apparatus performs S503, the hot data table is shown in Table 2. It is assumed that the data reduction apparatus evicts, in ascending order of frequencies (namely, quantities of times that data is written into the storage addresses) corresponding to the storage addresses recorded in the hot data table, the entry corresponding to the storage address recorded in the hot data table. In addition, F12, F21, F31, F41, F51, ... increase in sequence, and it is assumed that the second cache table corresponds to bitmaps 1 to 3 (namely, the bitmap 1, the bitmap 2, and the bitmap 3) that are arranged in sequence. Each of the three bitmaps includes bits 0 to 3 (namely, the bit 0, the bit 1, the bit 2, and the bit 3). When the data reduction apparatus evicts the entry corresponding to the storage address recorded in the hot data table, first, with reference to FIG. 7 and FIG. 8, the data reduction apparatus reads, from the hot data table into the second cache table, an entry corresponding to a storage address "LBA1" recorded in the hot data table (the entry corresponding to the storage address "LBA1" includes "LBA1", "SFP12", "F12", and "t12"), sets the bit 0 in the bitmap 1 to 1, and deletes the entry corresponding to the storage address "LBA1" recorded in the hot data table. In this way, the entry corresponding to the storage address "LBA1" is evicted from the hot data table to the second cache table. Then, with reference to FIG. 8 and FIG. 9, the data reduction apparatus reads, from the hot data table into the second cache table, an entry corresponding to a storage address "LBA2" recorded in the hot data table (the entry corresponding to the storage address "LBA2" includes "LBA1", "SFP21", "F21", and "t21"), sets the bit 1 in the bitmap 1 to 1, and deletes the entry corresponding to the storage address "LBA2" recorded in the hot data table. In this way, the entry corresponding to the storage address "LBA2" is evicted from the hot data table to the second cache table. Then, with reference to FIG. 9 and FIG. 10, the data reduction apparatus reads, from the hot data table into the second cache table, an entry corresponding to a storage address "LBA3" recorded in the hot data table (the entry corresponding to the storage address "LBA3" includes "LBA3", "SFP31", "F31", and "t31") , sets the bit 2 in the bitmap 1 is to 1, and deletes the entry corresponding to the storage address "LBA3" recorded in the hot data table. In this way, the entry corresponding to the storage address "LBA3" is evicted from the hot data table to the second cache table. This is repeated until all the bits of each of the bitmaps 1 to 3 are set to 1 (as shown in FIG. 11). In this case, the bits 0 to 3 in the bitmap 1 sequentially correspond to LBA1 to LBA4 in the second cache table (or correspond to entries corresponding to LBA1 to LBA4), the bits 0 to 3 in the bitmap 2 sequentially correspond to LBA5 to LBA8 in the second cache table (or correspond to entries corresponding to LBA5 to LBA6), and the bits 0 to 3 in the bitmap 3 sequentially correspond to LBA9 to LBA12 in the second cache table (or correspond to entries corresponding to LBA9 to LBA12). Then, as shown in FIG. 12, in an arrangement order of the bitmaps 1 to 3, the data reduction apparatus first reads, from the second cache table into the first cache table, LBA1 to LBA4 that correspond to the bitmap 1 in the second cache table and fingerprints (namely, fingerprints corresponding to the storage addresses) in the entries corresponding to the storage addresses, deletes LBA1 to LBA4 that are recorded in the second cache table and the entries corresponding to the storage addresses, and sets all the bits in the bitmap 1 to 0. Then, as shown in FIG. 13, the data reduction apparatus reads, from the second cache table into the first cache table, LBA5 to LBA8 that correspond to the bitmap 2 in the second cache table and fingerprints (namely, fingerprints corresponding to the storage addresses) in the entries corresponding to the storage addresses, deletes LBA5 to LBA8 that are recorded in the second cache table and the entries corresponding to the storage addresses, and sets all the bits in the bitmap 2 to 0. Finally, as shown in FIG. 14, the data reduction apparatus reads, from the second cache table into the first cache table, LBA9 to LBA12 that correspond to the bitmap 3 in the second cache table and fingerprints (namely, fingerprints corresponding to the storage addresses) in the entries corresponding to the storage addresses, deletes LBA9 to LBA12 that are recorded in the second cache table and the entries corresponding to the storage addresses, and sets all the bits in the bitmap 3 to 0. Through the foregoing process, the data reduction apparatus reads, into the first cache table, LBA1 to LBA12 that are recorded in the hot data table and the fingerprints corresponding to the storage addresses. In the first cache table, each LBA corresponds to only one fingerprint, and each LBA corresponds to only one entry. There is no invalid fingerprint or invalid entry in the first cache table, and overheads of the first cache table are low. Overheads of reducing, based on the first cache table, data stored in a persistent storage medium are low, and efficiency of data reduction is high. In FIG. 12 to FIG. 14, an example in which the data reduction apparatus reads, into the first cache table, the storage addresses recorded in the second cache table and fingerprints in the entries corresponding to the storage addresses is used for description. Alternatively, the data reduction apparatus may read, into the first cache table as a whole, the entries corresponding to the storage addresses recorded in the second cache table. This is not limited in this embodiment of this application. In comparison with reading, into the first cache table as a whole, the entries corresponding to the storage addresses recorded in the second cache table, reading, into the first cache table, the storage addresses recorded in the second cache table and the fingerprints in the entries corresponding to the storage addresses can reduce overheads of the first cache table.

In an optional embodiment, in a process in which the data reduction apparatus reads, from the second cache table into the first cache table, the storage addresses recorded in the second cache table and the fingerprints in the entries corresponding to the storage addresses, each time the data reduction apparatus clears one bitmap (in other words, sets all bits in the bitmap to 0) or one bit (in other words, sets the bit to 0), the data reduction apparatus may evict the storage address from the hot data table to the second cache table. For example, after the data reduction apparatus sets all the bits in the bitmap 1 to 0, in a process in which the data reduction apparatus reads, from the second cache table into the first cache table, LBA5 to LBA8 that correspond to the bitmap 2 in the second cache table and the fingerprints in the entries corresponding to the storage addresses, the data reduction apparatus concurrently reads, from the hot data table into the second cache table, an entry corresponding to an storage address "LBA13" recorded in the hot data table (the entry corresponding to the storage address "LBA13" includes "LBA13", "SFP131", "F131", and "t131"). In this way, processing efficiency of the data reduction apparatus can be improved. In addition, after the data reduction apparatus reads, into the second cache table, an entry corresponding to a storage address recorded in the hot data table, if the data reduction apparatus determines that the storage address changes to a hot address again, the data reduction apparatus rereads, into the hot data table, an entry corresponding to the storage address recorded in the second cache table, and does not read, into the first cache table, the entry corresponding to the storage address. In this way, this can prevent the entry corresponding to the hot address from being recorded in the first cache table. For example, after the data reduction apparatus reads, into the second cache table, the entry corresponding to the storage address recorded in the hot data table, if the data reduction apparatus receives an I/O request used for writing data into a storage address, the data reduction apparatus determines that the storage address changes to the hot address, and the data reduction apparatus rereads, into the hot data table, the entry corresponding to the storage address.

In this embodiment of this application, each bitmap corresponding to the second cache table may correspond to one cold level, and different bitmaps correspond to different cold levels. A quantity of bitmaps corresponding to the second cache table may be determined based on an actual space limitation and a requirement of the cold level. A quantity of bits included in each bitmap may be determined based on the actual space limitation and an address range accessed by a local I/O request (namely, an I/O request in a time period). For example, the local I/O requests are generally distributed in a plurality of storage addresses, and the quantity of bits included in each bitmap is determined based on a quantity of the plurality of storage addresses. The quantity of bits included in each bitmap corresponding to the second cache table may be adjusted. Quantities of bits included in the plurality of bitmaps corresponding to the second cache table may be equal or not equal. This is not limited in this embodiment of this application.

In this embodiment of this application, an example in which the data reduction apparatus evicts, based on the eviction parameter (namely, the eviction parameter of the storage address) in the entry corresponding to the storage address recorded in the hot data table, the entry corresponding to the storage address recorded in the hot data table (in other words, reads, from the hot data table into the first cache table, the entry corresponding to the storage address recorded in the hot data table) is used for description. This is merely an example, and the data reduction apparatus may alternatively use another eviction policy to evict the entry corresponding to the storage address recorded in the hot data table. For example, the data reduction apparatus reads, from the hot data table into the first cache table in an arrangement order of the storage addresses recorded in the hot data table, the entries corresponding to the storage addresses recorded in the hot data table. For another example, the data reduction apparatus randomly reads, from the hot data table into the first cache table, the entry corresponding to the storage address recorded in the hot data table. For still another example, the data reduction apparatus determines, at a granularity of the storage address, whether the storage address recorded in the hot data table changes to the cold address (for example, if the data reduction apparatus determines that the entry corresponding to the storage address recorded in the hot data table is not updated in target duration, the data reduction apparatus determines that the storage address changes to a cold address). Each time the data reduction apparatus determines that a storage address changes to a cold address, the data reduction apparatus reads, from the hot data table into the first cache table, an entry corresponding to the storage address. An eviction policy used when the data reduction apparatus evicts the entry corresponding to the storage address recorded in the hot data table is not limited in this embodiment of this application. In this embodiment of this application, the fingerprint corresponding to the storage address is recorded in the hot data table, so that overheads of read amplification can be avoided. For example, if the fingerprint corresponding to the storage address is not recorded in the hot data table, after the entry corresponding to the storage address recorded in the hot data table is evicted to the first cache table, the data reduction apparatus needs to read corresponding data from the persistent storage medium based on the storage address, and calculate a fingerprint of the data. In this way, overheads of one time of read amplification are caused. In this embodiment of this application, the fingerprint corresponding to the storage address is recorded in the hot data table, and the fingerprint corresponding to the storage address recorded in the hot data table is evicted to the first cache table, so that overheads of read amplification of reading the corresponding data from the persistent storage medium can be avoided.

S502 and S503 may be an implementation process in which the data reduction apparatus updates, based on popularity of the first address, the entry corresponding to the first address in the hot data table. In other words, content described in S502 and S503 may be an implementation process of S402.

In conclusion, according to the data reduction method provided in this embodiment of this application, the data reduction apparatus records, in the hot data table, the entry corresponding to the hot address. When the data reduction apparatus determines that the hot address recorded in the hot data table changes to the cold address, the data reduction apparatus reads, from the hot data table into the first cache table, an entry corresponding to the cold address. This prevents the entry corresponding to the hot address from being recorded in the first cache table, and increases a proportion of valid data in the first cache table. In addition, overheads of the first cache table are reduced, and overheads of analyzing the first cache table by the data reduction apparatus are reduced, to reduce overheads of data reduction, and improve efficiency of the data reduction. In addition, according to the data reduction method provided in this embodiment of this application, overheads of a grouping information table obtained based on the fingerprint recorded in the first cache table can be reduced, and utilization of memory space can be improved. Data reduction is performed based on the improved first cache table in this embodiment of this application, to reduce invalid calculation and a resource waste, and reduce resource consumption and computing power consumption.

In an optional embodiment, still with reference to FIG. 5, after S501, the method further includes the following steps S504 and S505.

S504: When the first address is the cold address, record, in the hot data table, the entry corresponding to the first address.

In an optional embodiment, as shown in FIG. 6 or FIG. 7, the hot data module further includes an insertion interface. When the data reduction apparatus determines that the first address is the cold address, the data reduction apparatus inserts, into the hot data table through the insertion interface, the entry corresponding to the first address. The entry corresponding to the first address includes the first address and the fingerprint of the first data, and optionally further includes the eviction parameter of the first address, where the eviction parameter of the first address includes at least one of the following: the quantity of times that data is written into the first address and the timestamp at which the first data is written into the first address. For example, the data reduction apparatus records, in the hot data table as one entry, the first address, the fingerprint of the first data, the quantity of times that data is written into the first address (in this case, the quantity of times that data is written into the first address is 1), and the timestamp at which the first data is written into the first address, to record, in the hot data table, the entry corresponding to the first address.

In this embodiment of this application, when the data reduction apparatus determines that the first address is the cold address, the data reduction apparatus records, in the hot data table, the entry corresponding to the first address. In this way, the data reduction apparatus constructs an address set used for determining cold and hot features of a storage address. Therefore, when the data reduction apparatus subsequently obtains the first address, the data reduction apparatus determines cold and hot features of the first address depending on whether the first address exists in the hot data table, in other words, determines whether the first address is the hot address.

S505: Record, in the first cache table, the entry corresponding to the first address.

The entry corresponding to the first address includes the first address and the fingerprint of the first data, and optionally further includes the eviction parameter of the first address. An example in which the entry corresponding to the first address includes the first address and the fingerprint of the first data is used for description herein. For example, the data reduction apparatus records, in the first cache table as one entry, the first address and the fingerprint of the first data, to record, in the first cache table, the entry corresponding to the first address.

After the data reduction apparatus determines that the first address is the cold address, the data reduction apparatus records, in the first cache table, the entry corresponding to the first address, so that the first address enters a data reduction procedure as soon as possible.

In embodiments of this application, the data reduction apparatus is provided with a hot eviction function. After the data reduction apparatus obtains a storage address, if the data reduction apparatus enables the hot eviction function, the data reduction apparatus performs a hot eviction procedure for the storage address. If the data reduction apparatus disables the hot eviction function, the data reduction apparatus directly records, in the first cache table, an entry corresponding to the storage address, so that the storage address enters a data reduction procedure. For example, after the data reduction apparatus obtains the first address, if the data reduction apparatus enables the hot eviction function, the data reduction apparatus performs an operation related to the hot data table, for example, performs S402 (or performs S502 to S505). If the data reduction apparatus disables the hot eviction function, the data reduction apparatus directly records, in the first cache table, the entry corresponding to the first address.

In an optional embodiment, the data reduction apparatus obtains a second address. When the data reduction apparatus determines to enable the hot eviction function, the data reduction apparatus performs a procedure similar to S502 to S505. When the data reduction apparatus determines to disable the hot eviction function, the data reduction apparatus records, in the first cache table, an entry corresponding to the second address. For example, the second address is a storage address of second data, and the data reduction apparatus records, in the first cache table, the entry corresponding to the second address, so that the entry corresponding to the second address includes the second address and a fingerprint of the second data.

In an optional embodiment, before the data reduction apparatus determines whether the first address is the hot address, for example, before the data reduction apparatus performs S502 to S505, the data reduction apparatus determines whether the data reduction apparatus enables the hot eviction function. When the data reduction apparatus determines that the data reduction apparatus enables the hot eviction function, the data reduction apparatus performs S502 to S505. When the data reduction apparatus determines that the data reduction apparatus does not enable the hot eviction function, the data reduction apparatus may directly perform S505.

In an optional embodiment, the data reduction apparatus enables the hot eviction function when a condition for enabling the hot eviction function is met. The condition for enabling the hot eviction function includes at least one of the following: a proportion of a hot address in a storage address of the persistent storage medium in the storage system is greater than a preset proportion, and an amount of data of the first cache table is greater than a target amount of data, for example, an amount of valid data of the first cache table is greater than the target amount of data. In an example, after the data reduction apparatus disables the hot eviction function, the data reduction apparatus obtains the proportion of the hot address in the storage address of the persistent storage medium in the storage system in real time or periodically, and determines whether the proportion is greater than the preset proportion. If the proportion is greater than the preset proportion, the data reduction apparatus determines that the condition for enabling the hot eviction function is met, and the data reduction apparatus enables the hot eviction function. If the proportion is not greater than the preset proportion, the data reduction apparatus determines that the condition for enabling the hot eviction function is not met, and the data reduction apparatus does not enable the hot eviction function. In another example, after the data reduction apparatus disables the hot eviction function, the data reduction apparatus obtains the amount of data of the first cache table in real time or periodically, and determines whether the amount of data of the first cache table is greater than the target amount of data. If the amount of data of the first cache table is greater than the target amount of data, the data reduction apparatus determines that the condition for enabling the hot eviction function is met, and the data reduction apparatus enables the hot eviction function. If the amount of data of the first cache table is not greater than the target amount of data, the data reduction apparatus does not determine that the condition for enabling the hot eviction function is met, and the data reduction apparatus does not enable the hot eviction function.

In an optional embodiment, the data reduction apparatus disables the hot eviction function when a condition for disabling the hot eviction function is met. The condition for disabling the hot eviction function includes at least one of the following: a proportion of a hot address in a storage address of the persistent storage medium in the storage system is not greater than a preset proportion, and an amount of data of the first cache table is not greater than a target amount of data, for example, an amount of valid data of the first cache table is not greater than a target amount of data. In an example, after the data reduction apparatus enables the hot eviction function, the data reduction apparatus obtains the proportion of the hot address in the storage address of the persistent storage medium in the storage system in real time or periodically, and determines whether the proportion is greater than the preset proportion. If the proportion is not greater than the preset proportion, the data reduction apparatus determines that the condition for disabling the hot eviction function is met, and the data reduction apparatus disables the hot eviction function. If the proportion is greater than the preset proportion, the data reduction apparatus determines that the condition for disabling the hot eviction function is not met, and the data reduction apparatus does not disable the hot eviction function. In another example, after the data reduction apparatus enables the hot eviction function, the data reduction apparatus obtains the amount of data of the first cache table in real time or periodically, and determines whether the amount of data of the first cache table is greater than the target amount of data. If the amount of data of the first cache table is not greater than the target amount of data, the data reduction apparatus determines that the condition for disabling the hot eviction function is met, and the data reduction apparatus disables the hot eviction function. If the amount of data of the first cache table is greater than the target amount of data, the data reduction apparatus does not determine that the condition for disabling the hot eviction function is met, and the data reduction apparatus does not disable the hot eviction function.

When the proportion of the hot address in the storage address of the persistent storage medium in the storage system is greater than the preset proportion, it indicates that there are many hot addresses in the persistent storage medium. If entries corresponding to the hot addresses are recorded in the first cache table, overheads of the first cache table and overheads of analyzing the first cache table by the data reduction apparatus are easily increased. Therefore, the data reduction apparatus enables the hot eviction function, to prevent, from being recorded in the first cache table, the entries corresponding to the hot addresses. Correspondingly, when the proportion of the hot address in the storage address of the persistent storage medium is not greater than the preset proportion, it indicates that the persistent storage medium has few hot addresses or even does not have the hot address. Therefore, the data reduction apparatus disables the hot eviction function, so that the hot addresses can quickly enter a data reduction procedure. When the amount of data of the first cache table is greater than the target amount of data, it indicates that there is a large amount of data of the first cache table, and execution of the data reduction procedure is slow. If the entry corresponding to the hot address is recorded in the first cache table, overheads of the first cache table and overheads of analyzing overheads of the first cache table by the data reduction apparatus are easily increased, and a processing speed of the data reduction procedure is further reduced. Therefore, the data reduction apparatus enables the hot eviction function, to prevent the entry corresponding to the hot address from being recorded in the first cache table. Correspondingly, when the amount of data of the first cache table is not greater than the target amount of data, it indicates that there is a small amount of data of the first cache table, and a data reduction procedure is performed quickly. Therefore, the data reduction apparatus disables the hot eviction function, so that hot addresses can quickly enter the data reduction procedure.

The foregoing condition for enabling the hot eviction function and the condition for disabling the hot eviction function are merely examples of this application. Alternatively, the condition for enabling the hot eviction function may be another enabling condition, and the condition for disabling the hot eviction function may be another disabling condition. The data reduction apparatus may alternatively enable the hot eviction function based on another enabling trigger condition, and disable the hot eviction function based on another disabling trigger condition. This is not limited in embodiments of this application.

The foregoing describes method embodiments of this application. The following describes apparatus embodiments of this application. The apparatus in this application is configured to perform the method in this application. For details that are not disclosed in apparatus embodiments, refer to method embodiments.

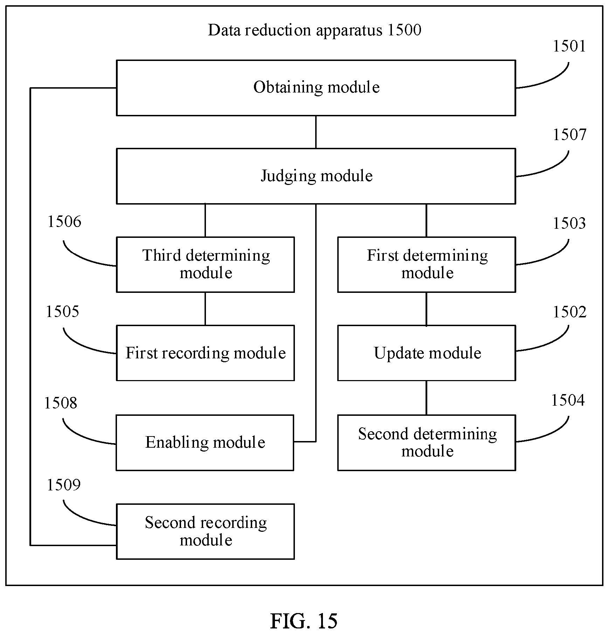

FIG. 15 is a diagram of a data reduction apparatus 1500 according to an embodiment of this application. The data reduction apparatus 1500 may implement the data reduction method shown in FIG. 4 or FIG. 5. As shown in FIG. 15, the data reduction apparatus 1500 includes an obtaining module 1501 and an update module 1502.

The obtaining module 1501 is configured to obtain a first address. For a function implementation of the obtaining module 1501, refer to related descriptions in S401 and S501.

The update module 1502 is configured to update, based on popularity of the first address, an entry corresponding to the first address in a hot data table, where popularity of a storage address in the hot data table is greater than popularity of a storage address in a first cache table, and the first cache table is used for data reduction. For a function implementation of the update module 1502, refer to related descriptions in S402.

Optionally, the first address is a storage address of first data, and the update module 1502 is configured to: when the first address is a hot address, update, to a fingerprint of the first data, a fingerprint in the entry corresponding to the first address. For a function implementation of the update module 1502, refer to related descriptions in S402 and S502.

Optionally, the data reduction apparatus 1500 further includes: a first determining module 1503, configured to: when the first address exists in the hot data table, determine that the first address is the hot address. For a function implementation of the first determining module 1503, refer to related descriptions in S502.

Optionally, the update module 1502 is configured to: when the first address is the hot address, update an eviction parameter in the entry corresponding to the first address. For a function implementation of the update module 1502, refer to related descriptions in S502.

Optionally, the eviction parameter includes at least one of the following: a quantity of times that data is written into the first address and a timestamp at which data is written into the first address for the last time.

Optionally, the update module 1502 is configured to: when the first address changes to a cold address, read, into the first cache table, the entry corresponding to the first address. For a function implementation of the update module 1502, refer to related descriptions in S503.

Optionally, the data reduction apparatus 1500 further includes: a second determining module 1504, configured to: when an amount of data of the hot data table reaches a preset amount of data, determine that the first address changes to the cold address. For a function implementation of the second determining module 1504, refer to related descriptions in S503.

Optionally, the update module 1502 is configured to read, into the first cache table based on the eviction parameter in the entry corresponding to the first address, the entry corresponding to the first address. For a function implementation of the update module 1502, refer to related descriptions in S502.

Optionally, the update module 1502 is configured to: read, into a second cache table, the entry corresponding to the first address, where popularity of a storage address in the second cache table is less than the popularity of the storage address in the hot data table and is greater than the popularity of the storage address in the first cache table; and when the second cache table meets the eviction condition, read, into the first cache table, the entry corresponding to the first address.

Optionally, the data reduction apparatus 1500 further includes: a first recording module 1505, configured to: when the first address is the cold address, record, in the hot data table, the entry corresponding to the first address, and record, in the first cache table, the entry corresponding to the first address. For a function implementation of the first recording module 1505, refer to related descriptions in S504 to S505.

Optionally, the data reduction apparatus 1500 further includes: a third determining module 1506, configured to: when the first address does not exist in the hot data table, determine that the first address is the cold address. For a function implementation of the third determining module 1506, refer to related descriptions in S502.

Optionally, the data reduction apparatus 1500 further includes: a judging module 1507, configured to: when a hot eviction function is enabled, determine whether the first address is the hot address. For a function implementation of the judging module 1507, refer to related descriptions in S502.

Optionally, the data reduction apparatus 1500 further includes: an enabling module 1508, configured to enable the hot eviction function when a condition for enabling the hot eviction function is met. The condition for enabling the hot eviction function includes at least one of the following: a proportion of a hot address in a storage address of a persistent storage medium is greater than a preset proportion, and an amount of data of the first cache table is greater than a target amount of data.

Optionally, the obtaining module 1501 is further configured to obtain a second address. The data reduction apparatus 1500 further includes: a second recording module 1509, configured to: when the hot eviction function is disabled, record, in the first cache table, an entry corresponding to the second address.

Optionally, the data reduction apparatus 1500 is a processor in the storage system.

Optionally, the data reduction apparatus 1500 is a data reduction chip in the storage system.

Optionally, the data reduction apparatus 1500 is a data reduction device outside the storage system.

In conclusion, according to the data reduction apparatus provided in this application, the data reduction apparatus updates, based on the popularity of the first address, the entry corresponding to the first address in the hot data table, and the popularity of the storage address in the hot data table is greater than the popularity of the storage address in the first cache table used for data reduction. The data reduction apparatus records, in the hot data table, an entry corresponding to a storage address with higher popularity, and records, in the first cache table, an entry corresponding to a storage address with lower popularity, to reduce overheads of the first cache table and reduce overheads of analyzing the first cache table by the data reduction apparatus. Therefore, overheads of data reduction are reduced, and efficiency of the data reduction is improved.

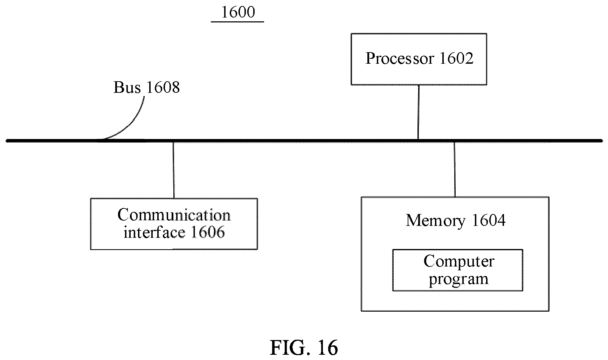

The data reduction apparatus provided in embodiments of this application may be a processor or a data reduction chip in a storage system, or may be a data reduction device outside the storage system. When the data reduction apparatus is a data reduction device outside the storage system, a structure of the data reduction apparatus may be shown in FIG. 16. Refer to FIG. 16. The data reduction apparatus 1600 includes a processor 1602, a memory 1604, a communication interface 1606, and a bus 1608. The processor 1602, the memory 1604, and the communication interface 1606 are communicatively connected to each other via the bus 1608. That the processor 1602, the memory 1604, and the communication interface 1606 are communicatively connected to each other via the bus 1608 is merely used as an example. In an implementation process, the processor 1602, the memory 1604, and the communication interface 1606 may alternatively be communicatively connected to each other in a connection manner other than the bus 1608.

The memory 1604 is configured to store a computer program, and the computer program usually includes instructions and data. In embodiments of this application, the memory 1604 includes various types of storage media, such as a RAM, a ROM, an NVRAM, a PROM, an EPROM, an EEPROM, a flash memory, an optical memory, and a register. In addition, the memory 1604 includes a magnetic disk, a hard disk, and/or a memory. The memory 1604 herein includes a persistent storage medium, a non-persistent storage medium, and the like.

The processor 1602 may be a general-purpose processor. The general-purpose processor is a processor that performs a specific step and/or operation by reading and executing a computer program stored in the memory. In a process of performing the foregoing steps and/or operations, the general-purpose processor may use data stored in the memory. For example, the computer program stored in the memory 1604 is executed to implement a related function of each module in the data reduction apparatus 1500 shown in FIG. 15. The general-purpose processor is, for example, but not limited to, a CPU. In addition, the processor 1602 may alternatively be a dedicated processor. The dedicated processor is a processor specially designed to perform a specific step and/or operation. The dedicated processor is, for example, but is not limited to, a DSP, an ASIC, and an FPGA. In addition, the processor 1602 may be a combination of a plurality of processors, for example, a multi-core processor. The processor 1602 includes one or more circuits, to perform all or some of the steps of the data reduction method provided in the foregoing embodiments.

The communication interface 1606 includes an interface configured to implement interconnection between components in the data reduction apparatus 1600, such as a network interface, an input/output (input/output, I/O) interface, a physical interface, and a logical interface, and an interface configured to implement interconnection between the data reduction apparatus 1600 and another device (for example, a processor in a storage system). The physical interface may be a gigabit Ethernet (gigabit ethernet, GE) interface, and is configured to implement interconnection between the data reduction apparatus 1600 and another device. The logical interface is an interface inside the data reduction apparatus 1600, and is configured to implement interconnection between components inside the data reduction apparatus 1600. It is easy to understand that the communication interface 1606 may be used by the data reduction apparatus 1600 to communicate with another device. For example, as shown in FIG. 3, the communication interface 1606 is used by the data reduction device 03 (namely, the data reduction apparatus 1600) to communicate with the processor 021 in the storage system 02.

The bus 1608 may be a communication bus, of any type, for example, a system bus, configured to implement interconnection between the processor 1602, the memory 1604, and the communication interface 1606.

The foregoing components may be separately disposed on chips that are independent of each other, or may be at least partially or all disposed on a same chip. Whether each component is independently disposed on different chips or integratedly disposed on one or more chips often depends on a product design requirement. A specific implementation of the foregoing component is not limited in embodiments of this application.

The data reduction apparatus 1600 shown in FIG. 16 is merely an example. In an implementation process, the data reduction apparatus 1600 may further include other components, which are not listed one by one in this specification. The data reduction apparatus 1600 shown in FIG. 16 may perform data reduction by performing all or some steps of the data reduction method provided in the foregoing embodiments.

Embodiments of this application further provides a data reduction system. The data reduction system is a storage system, or the data reduction system includes a storage system and a data reduction device located outside the storage system.

In an optional embodiment, the data reduction system is a storage system, and the storage system includes a processor and a storage medium. For example, the storage medium includes a persistent storage medium and a non-persistent storage medium. The processor is separately connected to the persistent storage medium and the non-persistent storage medium, and the processor is the data reduction apparatus shown in FIG. 15. For example, the data reduction system is the storage system 00 shown in FIG. 1.

In another optional embodiment, the data reduction system is a storage system, and the storage system includes a processor, a data reduction chip, and a storage medium. For example, the storage medium includes a persistent storage medium and a non-persistent storage medium. The processor is separately connected to the persistent storage medium and the non-persistent storage medium. The data reduction chip is the data reduction apparatus shown in FIG. 15. For example, the data reduction system is the storage system 01 shown in FIG. 2.

In still another optional embodiment, the data reduction system includes a storage system and a data reduction device located outside the storage system. The storage system includes a processor and a storage medium. For example, the storage medium includes a persistent storage medium and a non-persistent storage medium. The processor is separately connected to the persistent storage medium and the non-persistent storage medium, and the processor is further connected to the data reduction device outside the storage system. The data reduction device includes the data reduction apparatus shown in FIG. 15 or FIG. 16. For example, the data reduction system is shown in FIG. 3.

Embodiments of this application further provide a storage device, including the storage system described in the foregoing embodiments. For example, the storage device is a storage array or a storage server.

Embodiments of this application further provide a computer-readable storage medium. The computer-readable storage medium stores a computer program. When the computer program is executed (for example, executed by a storage device, one or more processors, a data reduction chip, a data reduction device, and the like), all or some of the steps of the data reduction method provided in the foregoing method embodiments are implemented.

Embodiments of this application further provide a computer program product. The computer program product includes a program or code. When the program or code is executed (for example, executed by a storage device, one or more processors, a data reduction chip, a data reduction device, and the like), all or some of the steps of the data reduction method provided in the foregoing method embodiments are implemented.

Embodiments of this application further provide a chip. The chip includes a programmable logic circuit and/or program instructions. When the chip is run, all or some of the steps of the data reduction method provided in the foregoing method embodiments are implemented. The chip is a data reduction chip, and may be an ASIC, a CPLD, an FPGA, a GAL, or any combination thereof.

All or some of foregoing embodiments may be implemented by software, hardware, firmware, or any combination thereof. When the software is used for implementation, all or some of the foregoing embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, a storage device, a computer, a server, or a data center to another website, storage device, computer, server, or data center in a wired (for example, a coaxial cable, an optical fiber, or a digital subscriber line) or wireless (for example, infrared, radio, or microwave) manner. The computer-readable storage medium may be any usable medium that can be accessed by the computer, or a data storage apparatus such as a server or a data center integrated with one or more usable media. The usable medium may be a magnetic medium (for example, a floppy disk, a hard disk, or a magnetic tape), an optical medium, a semiconductor medium (for example, a solid state drive), or the like.

It should be understood that the term "at least one" in this application refers to one or more, the term "a plurality of" refers to two or more, and the term "at least two" refers to two or more. In this application, unless otherwise specified, the symbol "/" represents "or", for example, A/B represents A or B. The term "and/or" in this application describes only an association relationship for describing associated objects and represents that three relationships exist. For example, A and/or B may represent the following three cases: Only A exists, both A and B exist, and only B exists. In addition, for ease of clear description, in this application, terms such as "first", "second", and "third" are used to distinguish same items or similar items with basically same functions and functions. A person skilled in the art may understand that the terms "first", "second", "third", and the like do not limit a quantity and an execution sequence.

Different types of embodiments, such as method embodiments and apparatus embodiments, that are provided in this application, may refer to each other. This is not limited in embodiments of this application. A sequence of operations in the method embodiments provided in embodiments of this application can be properly adjusted, and the operations can be correspondingly added or deleted based on a situation. Any variation method that can be readily figured out by a person skilled in the art within the technical scope disclosed in this application shall fall within the protection scope of this application. Therefore, details are not described again.

In the corresponding embodiments provided in this application, it should be understood that the disclosed apparatus and the like may be implemented in another composition manner. For example, the described apparatus embodiments are merely examples. For example, the module division is merely logical function division and may be another division in actual implementation. For example, a plurality of modules or components may be combined or integrated into another system, or some features may be ignored, or not performed.

Units described as separate parts may or may not be physically separate; and parts described as units may or may not be physical units, may be located in one position, or may be distributed on a plurality of devices (for example, storage devices). Some or all of the units may be selected based on an actual requirement to achieve the objectives of the solutions of embodiments.

The foregoing descriptions are merely example implementations of this application, and are not intended to limit the protection scope of this application. Any equivalent modification or replacement readily figured out by a person skilled in the art within the technical scope disclosed in this application shall fall within the protection scope of this application. Therefore, the protection scope of this application shall be subject to the protection scope of the claims.

## Claims

1. A data reduction method, comprising:
obtaining a first address; and
updating, based on popularity of the first address, an entry corresponding to the first address in a hot data table, wherein popularity of a storage address in the hot data table is greater than popularity of a storage address in a first cache table, and the first cache table is used for data reduction.

2. The method according to claim 1, wherein the first address is a storage address of first data; and
the updating, based on popularity of the first address, an entry corresponding to the first address in a hot data table comprises: when the first address is a hot address, updating, to a fingerprint of the first data, a fingerprint in the entry corresponding to the first address.

3. The method according to claim 2, wherein the method further comprises:
when the first address exists in the hot data table, determining that the first address is the hot address.

4. The method according to any one of claims 1 to 3, wherein
the updating, based on popularity of the first address, an entry corresponding to the first address in a hot data table comprises: when the first address is the hot address, updating an eviction parameter in the entry corresponding to the first address.

5. The method according to claim 4, wherein the eviction parameter comprises at least one of the following: a quantity of times that data is written into the first address or a timestamp at which data is written into the first address for the last time.

6. The method according to any one of claims 1 to 5, wherein the updating, based on popularity of the first address, an entry corresponding to the first address in a hot data table comprises:
when the first address changes to a cold address, reading, into the first cache table, the entry corresponding to the first address.

7. The method according to claim 6, wherein the method further comprises:
when an amount of data of the hot data table reaches a preset amount of data, determining that the first address changes to the cold address.

8. The method according to claim 6 or 7, wherein
the reading, into the first cache table, the entry corresponding to the first address comprises: reading, into the first cache table based on the eviction parameter in the entry corresponding to the first address, the entry corresponding to the first address.

9. The method according to any one of claims 6 to 8, wherein
the reading, into the first cache table, the entry corresponding to the first address comprises:
reading, into a second cache table, the entry corresponding to the first address, wherein popularity of a storage address in the second cache table is less than the popularity of the storage address in the hot data table and is greater than the popularity of the storage address in the first cache table; and
when the second cache table meets an eviction condition, reading, into the first cache table, the entry corresponding to the first address.

10. The method according to any one of claims 1 to 9, wherein the method further comprises:
when the first address is the cold address, recording, in the hot data table, the entry corresponding to the first address; and
recording, in the first cache table, the entry corresponding to the first address.

11. The method according to any one of claims 1 to 10, wherein the method further comprises:
when a hot eviction function is enabled, determining whether the first address is the hot address.

12. The method according to claim 11, wherein the method further comprises:
when a condition for enabling the hot eviction function is met, enabling the hot eviction function, wherein
the condition for enabling the hot eviction function comprises at least one of the following: a proportion of a hot address in a storage address of a persistent storage medium is greater than a preset proportion, and an amount of data of the first cache table is greater than a target amount of data.

13. The method according to claim 11 or 12, wherein the method further comprises:
obtaining a second address; and
when the hot eviction function is disabled, recording, in the first cache table, an entry corresponding to the second address.

14. A data reduction apparatus, wherein the apparatus comprises:
an obtaining module, configured to obtain a first address; and
an update module, configured to update, based on popularity of the first address, an entry corresponding to the first address in a hot data table, wherein popularity of a storage address in the hot data table is greater than popularity of a storage address in a first cache table, and the first cache table is used for data reduction.

15. The apparatus according to claim 14, wherein the first address is a storage address of first data; and
the update module is configured to: when the first address is a hot address, update, to a fingerprint of the first data, a fingerprint in the entry corresponding to the first address.

16. The apparatus according to claim 15, wherein the apparatus further comprises:
a first determining module, configured to: when the first address exists in the hot data table, determine that the first address is the hot address.

17. The apparatus according to any one of claims 14 to 16, wherein
the update module is configured to: when the first address is the hot address, update an eviction parameter in the entry corresponding to the first address.

18. The apparatus according to claim 17, wherein the eviction parameter comprises at least one of the following: a quantity of times that data is written into the first address and a timestamp at which data is written into the first address for the last time.

19. The apparatus according to any one of claims 14 to 18, wherein
the update module is configured to: when the first address changes to a cold address, read, into the first cache table, the entry corresponding to the first address.

20. The apparatus according to claim 19, wherein the apparatus further comprises:
a second determining module, configured to: when an amount of data of the hot data table reaches a preset amount of data, determine that the first address changes to the cold address.

21. The apparatus according to claim 19 or 20, wherein
the update module is configured to read, into the first cache table based on the eviction parameter in the entry corresponding to the first address, the entry corresponding to the first address.

22. The apparatus according to any one of claims 19 to 21, wherein the update module is configured to:
read, into a second cache table, the entry corresponding to the first address, wherein popularity of a storage address in the second cache table is less than the popularity of the storage address in the hot data table and is greater than the popularity of the storage address in the first cache table; and
when the second cache table meets an eviction condition, read, into the first cache table, the entry corresponding to the first address.

23. The apparatus according to any one of claims 14 to 22, wherein the apparatus further comprises:
a first recording module, configured to: when the first address is the cold address, record, in the hot data table, the entry corresponding to the first address; and record, in the first cache table, the entry corresponding to the first address.

24. The apparatus according to any one of claims 14 to 23, wherein the apparatus further comprises:
a judging module, configured to: when a hot eviction function is enabled, determine whether the first address is the hot address.

25. The apparatus according to claim 24, wherein the apparatus further comprises:
an enabling module, configured to: when a condition for enabling the hot eviction function is met, enable the hot eviction function, wherein
the condition for enabling the hot eviction function comprises at least one of the following: a proportion of a hot address in a storage address of a persistent storage medium is greater than a preset proportion, and an amount of data of the first cache table is greater than a target amount of data.

26. The apparatus according to claim 24 or 25, wherein
the obtaining module is further configured to obtain a second address; and
the apparatus further comprises: a second recording module, configured to: when the hot eviction function is disabled, record, in the first cache table, an entry corresponding to the second address.

27. The apparatus according to any one of claims 14 to 26, wherein the data reduction apparatus is a processor in a storage system.

28. The apparatus according to any one of claims 14 to 26, wherein the data reduction apparatus is a data reduction chip in a storage system.

29. The apparatus according to any one of claims 14 to 26, wherein the data reduction apparatus is a data reduction device outside a storage system.

30. A data reduction apparatus, comprising a processor and a memory, wherein
the memory is configured to store a computer program; and
the processor is configured to execute a computer program stored in the memory, to enable the data reduction apparatus to perform the data reduction method according to any one of claims 1 to 13.

31. A data reduction system, wherein the data reduction system is a storage system, the storage system comprises a processor, and the processor comprises the data reduction apparatus according to any one of claims 14 to 27.

32. A data reduction system, wherein the data reduction system is a storage system, the storage system comprises a processor and a data reduction chip, and the data reduction chip comprises the data reduction apparatus according to any one of claims 14 to 26, and 28.

33. A data reduction system, comprising a storage system and a data reduction device outside the storage system, wherein the data reduction device comprises the data reduction apparatus according to any one of claims 14 to 26, 29, and 30.

34. A storage device, comprising the data reduction system according to claim 31 or 32.

35. A computer-readable storage medium, wherein the computer-readable storage medium stores a computer program, and when the computer program is executed, the data reduction method according to any one of claims 1 to 13 is implemented.

36. A computer program product, wherein the computer program product comprises a program or code, and when the program or the code is executed, the data reduction method according to any one of claims 1 to 13 is implemented.
